# EUROPÄISCHE PATENTANMELDUNG

(11) **EP 3 434 424 A1**
(43) Veröffentlichungstag der Anmeldung: **30.01.2019**
(21) Anmeldenummer: 17183552.3
(22) Anmeldetag: 27.07.2017
(51) Int. Cl.: B25J 9/16, G05B 19/4093

(54) **EFFIZIENTE PROGRAMMIERUNG VON ROBOTERN FÜR DIE BEARBEITUNG VON WERKSTÜCKEN MIT VERSCHIEDENEN VARIANTEN**

(71) Anmelder: Convergent Information Technologies GmbH, 4053 Haid (AT)
(72) Erfinder: Eberst, Christoph, 80939 München (DE); Ferri, Massimo, 84240 Reda (PL); Stöffler, Bernhard, 4533 Piberbach (AT); Umgeher, Gerhard, 4055 Pucking (AT); Feurer, Christian, 4020 Linz (AT)
(74) Vertreter: Westphal, Mussgnug & Partner Patentanwälte mbB

(57) **Zusammenfassung**

Es wird ein Verfahren zur computergestützten Programmierung von Robotern für die Bearbeitung von Werkstücken beschrieben. Gemäß einem Ausführungsbeispiel umfasst das Verfahren das Generieren eines ersten virtuellen Werkstücks durch Überlagerung von Modellen mehrerer Werkstückvarianten eines Werkstücks mittels eines auf einer Workstation ausgeführten Software-Tools sowie das Durchführen einer Bahnplanung zur Festlegung von Werkzeugbahnen für mindestens einen ersten Bereich des Werkstücks und Verifizieren der festgelegten Werkzeugbahnen auf Basis des ersten virtuellen Werkstücks. Jeder der Werkstückvarianten ist durch eine Menge bestimmter lokaler geometrischen Ausprägungen eines Grundkörpers gegeben. Die verschiedenen geometrischen Ausprägungen können z.B. durch an dem Werkstückgrundkörper angeordnete Anbauteile oder durch Modifikation der äußeren geometrischen Form des Werkstückgrundkörpers gebildet werden.

## Beschreibung

### TECHNISCHES GEBIET

Die vorliegende Erfindung betrifft die computergestützte (automatische und halbautomatische) Programmierung von Robotern, beispielsweise Roboter zur Vermessung oder zur Bearbeitung (Lackieren, Polieren, Schleifen, Schweißen, Abdichten von Nähten, etc.) von Werkstückoberflächen mit mehreren unterschiedlichen geometrischen Varianten.

### HINTERGRUND

Eine Aufgabe (*Task*) von Robotern in der Produktion besteht in der automatisierten Bearbeitung von Werkstückoberflächen (z.B. Lackieren, Polieren, Schleifen, und ähnliche Prozesse etc.). Zur Programmierung solcher Aufgaben werden mittels Off-Line-Programmierung oder "Teach-in" oder "Programmieren durch Vormachen" ausführbare Roboterprogramme erstellt, die von einer Robotersteuerung umgesetzt werden können. Ein Roboterprogramm beschreibt von der Robotersteuerung verarbeitbare Befehle, welche die Robotersteuerung in korrespondierende Ansteuersignale an den Roboter und das von dem Roboter bediente Werkzeug (z.B. Sprühpistole zum Lackieren, Polier- oder schleifwerkzeug, etc.) umsetzt, sodass der Roboter die programmierten Bewegungen und Aktionen durchführt, um die gewünschte Bearbeitung der Werkstückoberfläche zu erreichen.

Teach-in-Verfahren zur Programmierung von Robotern werden zunehmend durch halb- und vollautomatische Software-Tools ersetzt, welche z.B. auf einer Workstation ausgeführt werden und "off-fine" ein Roboterprogramm erstellen und simulieren (und validieren) können. Derartige Simulationen können die gesamte Roboterzelle (also die Roboter, das Werkstück und die Arbeitsumfeld der Roboter) umfassen, wobei sowohl die Bewegungen des Roboters (oder der Roboter) als auch die Durchführung der der Aufgabe des Roboters simuliert wird. Die Durchführung der Aufgabe (also beispielsweise das Lackieren der Oberfläche des Werkstückes) durch den Roboter wird in der Folge als Prozess bezeichnet. Das Ergebnis des Prozesses (beispielsweise die Dicke der während des Prozesses aufgetragenen Lackschicht) kann ebenfalls mit Hilfe der erwähnten Software-Tools simuliert werden.

Einer der ersten Schritte bei der computergestützten (automatischen oder halbautomatischen) Programmierung von Robotern ist die Bahnplanung, d.h. die Planung der Trajektorie (Position und Orientierung) des Tool-Center-Points (TCP) des Roboters und damit der Trajektorie des vom Roboter bedienten Werkzeugs. Eine Trajektorie kann aus mehreren Teilbahnen zusammengesetzt sein, die vom Computer basierend auf einem CAD-Model des Werkstücks automatisch oder halbautomatisch (computergestützt, jedoch mit Hilfe einer Person, welche in die Planung eingreifen kann) ermittelt werden können.

Bekannte computergestützte Methoden zur automatischen Bahnplanung generieren ein Roboterprogramm für Werkstücke mit einer bestimmten Geometrie (geometrischen Form). Es gibt Anwendungen, in denen Werkstücke in vielen verschiedenen Erscheinungsformen/Varianten einer bestimmten Grundform auftreten können. Die verschiedenen Varianten einer Grundform können beispielsweise dadurch entstehen, dass ein Grundkörper lokal unterschiedliche geometrische Ausprägungen aufweisen kann. Diese unterschiedlichen geometrischen Ausprägungen werden beispielsweise durch unterschiedliche Versionen eines Anbauteils gebildet. Das heißt, an einen Grundkörper (z.B. eine Karosserie) können - je nach Variante - verschiedene Kombinationen von Anbauteilen befestigt sein. Beispielsweise können Traktoren, Sattelschlepper oder Anhänger - je nach Variante - verschiedene Treibstofftanks, Lufttanks, Achsen, Stauräume, Zusatzmodule, etc. aufweisen. Angenommen es gibt eine Anzahl von N verschiedenen Anbauteilen und jeden Anbauteil existieren *V* Versionen (z.B. groß, mittel, klein), dann gibt es bis zu *(V*+*1)^{N}* Varianten der Grundform des Werkstücks. (*V*+*1* weil ein Anbauteil entweder in einer der V Versionen oder auch gar nicht verbaut werden kann).

Verschiedene Varianten einer Grundform können beispielsweise auch dadurch entstehen, dass Werkstücke in verschiedenen Kategorien (z.B. Langversion, Kurzversion eines Anhängers, Gegengewichte verschiedener Anzahl und Größe, Rahmen verschiedener Größe, etc.) hergestellt werden. In den verschiedenen Kategorien können Teile oder Bereiche des Werkstücks (äußerlich bzw. wo es für den Prozess relevant ist) ähnlich sein, oder Teile/Bereiche des Werkstücks können ähnlich oder identisch, jedoch an unterschiedlichen Position am Werkstücks angeordnet sein (z.B. bei unterschiedliche Längen der Werkstücke). Weitere Varianten einer Grundform können durch sogenannte "Facelifts" entstehen, bei denen die zu bearbeitenden Werkstücke früheren Werkstücken in Bereichen ähneln, und nur in manchen Bereichen neu/anders gestaltet sind. Auch unterschiedliche Produktgenerationen desselben Werkstücks unterscheiden sich oft nur geringfügig und können als Varianten desselben Werkstücks betrachtet werden.

Beim Einsatz bekannter Verfahren zur computergestützten Bahnplanung für die Erzeugung von Roboterprogrammen müsste für jede einzelne Variante des Werkstücks eine separate Bahnplanung durchgeführt und ein entsprechendes Roboterprogramm erzeugt (und simuliert und validiert) werden. Auch bei einer Unterteilung der Programmieraufgabe beispielsweise in Segmente und auch wenn Teileergebnisse für andere Varianten wieder verwendet werden, kann das vor allem bei Werkstücken mit komplexer Geometrie, bei denen keine vollautomatische Bahnplanung durchgeführt wird, sondern eine Person in den Planungsprozess manuell eingreift, nennenswert Zeit beanspruchen, und insbesondere dann, wenn vollautomatisch oder interaktiv festgelegten Roboterprogramme vor oder nach der Ausführung optimiert werden sollen. Der Erfinder hat dieses Problem erkannt, und ein Ziel der vorliegenden Erfindung besteht darin, durch effiziente Programmierung mit möglichst wenig Aufwand viele (oder im besten Fall alle Varianten) zu programmieren - und zu optimieren. Insbesondere im ersten Fall (mehrere Versionen unterschiedlicher Anbauteile) müssen dabei Programme für sehr viele (z.B. tausende) möglicher Werkstückvarianten (Varianten aus Kombinationen der Anbauteile) für die Roboter bereitstehen. Aufgrund der häufig erforderlichen nachfolgenden Optimierung der Roboterprogramme sollen nicht mit möglichst geringem Programmier- bzw. Planungsaufwand eine möglichst große Zahl von Varianten abgedeckt werden, sondern diese Varianten sollen auch mit einer möglichst geringen Zahl von Programmen (bestenfalls so wenig Programme wie unbedingt nötig) und diese wiederum mit möglichst wenig verschiedenen (zu optimierenden) Werkzeugbahnen abgedeckt werden.

### ZUSAMMENFASSUNG

Die oben genannte Aufgabe wird durch Verfahren gemäß Anspruch 1 gelöst. Unterschiedliche Ausführungsformen und Weiterentwicklungen sind Gegenstand der abhängigen Ansprüche.

Es wird ein Verfahren zur computergestützten Programmierung von Robotern für die Bearbeitung von Werkstücken beschrieben. Gemäß einem Ausführungsbeispiel umfasst das Verfahren das Generieren eines ersten virtuellen Werkstücks durch Überlagerung von Modellen mehrerer Werkstückvarianten eines Werkstücks mittels eines auf einer Workstation ausgeführten Software-Tools sowie das Durchführen einer Bahnplanung zur Festlegung von Werkzeugbahnen für mindestens einen ersten Bereich des Werkstücks und Verifizieren der festgelegten Werkzeugbahnen auf Basis des ersten virtuellen Werkstücks. Jeder der Werkstückvarianten ist durch eine Menge bestimmter lokaler geometrischen Ausprägungen eines Grundkörpers gegeben. Die verschiedenen geometrischen Ausprägungen können z.B. durch an dem Werkstückgrundkörper angeordnete Anbauteile oder durch Modifikation der äußeren geometrischen Form des Werkstückgrundkörpers gebildet werden. Des Weiteren wird ein korrespondierendes System zur (teil-) automatisierten computergestützten Programmierung beschrieben.

### KURZE BESCHREBIBUNG DER ZEICHNUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigt:
Figur 1 illustriert die Bildung eines Maximalmodells durch Überlagerung von CAD-Daten verschiedener Werkstückvarianten.
Figur 2 illustriert exemplarisch drei verschiedene konkrete Werkstückvarianten, die zu dem Maximalmodell gemäß Fig. 1 beitragen.
Figur 3 ist ein Flussdiagramm zur Illustration verschiedener Stufen der Programmerstellung für einen Roboter.
Figur 4 illustriert exemplarisch die computergestützte Programmerstellung in verschiedenen Segmenten eines Werkstücks.
Figur 5 ist ein Blockdiagram das exemplarisch die Struktur einer Offline Programmierung (OLP) darstellt.
Figur 6 ist ein Blockdiagramm, das ein Beispiel des hier beschriebenen computergestützten Verfahrens repräsentiert.
Figur 7 zeigt die individuelle Planung einer Werkzeugbahn für verschiedene Werkstückvarianten.
Figur 8 zeigt die Planung einer Werkzeugbahn anhand einer virtuellen Überlagerung mehrerer der Werkstückvarianten aus Fig. 7.
Figur 9 zeigt die Planung zweier Werkzeugbahnen anhand zweier verschiedenen virtuellen Überlagerungen mehrerer der Werkstückvarianten aus Fig. 7. Insbesondere wird der Einfluss von benachbarten aktuell nicht bearbeiteten Anbauteilen auf die Bahnen des aktuell bearbeiteten Anbauteils dargestellt, woraus sich zwei Bahnen für ein Anbauteil ergeben würden (keine Entkopplung).
Figur 10 zeigt ein Beispiel der individuellen Planung von Werkzeugbahnen (bzw. Gruppen von Werkzeugbahnen) für verschiedene konkret realisierbare Werkstückvarianten. Dargestellt ist auch die Reduzierung der möglichen Kombinationen, welche dadurch erreicht wird, dass im außerhalb des aktuell betrachteten Bereichs ein Maximalmodells im virtuelles Werkstück verwendet wird.
Figur 11 illustriert exemplarisch wie die Anzahl der Werkzeugbahnen (d.h. Gruppen von Werkzeugbahnen) durch die hier beschriebenen Methoden reduziert werden.
Figur 12 illustriert die Anwendung der hier beschriebenen Methoden auf eine Menge ähnlicher Werkstücke, welche als Varianten eines Grundkörpers betrachtet werden können; die Planung ergibt eine minimale Anzahl von Werkzeugbahnen für drei verschiedene Varianten (reduziert: 3+2 Bahnen, statt 3x4 Bahnen) anhand einer virtuellen Überlagerungen mehrerer Werkstückvarianten.

### DETAILLIERTE BESCHREIBUNG

Für die Programmierung von Robotern (umfassend die z.B. automatische, halbautomatische, computergestützt manuelle, etc. Bahnplanung) sind folgende Ansätze (A-D) bekannt: (A) Programmierung von einem Programm je Roboter für jede Variante eine Werkstücks beispielsweise mittels Teach-in oder PDV (Programmieren durch Vormachen) in einer Roboterzelle oder mittels OLP (Offline-Programmierung). (B) Zerlegung der Programme je Werkstück in Sektionen oder Teilbereiche, die sich an der Form/Abmessung des Werkstücks orientieren (virtuelles "Zerschneiden" in Sektionen) oder sich an den Arbeitsbereichen von Robotern oder Zusatzaktuatoren orientieren für welche jeweils ein Programm je Roboter generiert wird. Beispielsweise kann bei einer Positionierung eines Werkstücks auf einer drehbaren oder verschiebbaren Plattform für verschiedene Positionen des Werkstücks ein eigenes Programm erstellt werden. Dieser Ansatz kann mit Ansatz (A) kombiniert werden. (C) Das einzelne Programmieren der Roboterbahnen für einzelne Anbauteile und für Trägerstrukturen, beispielsweise als einzelne Programme oder Unterprogramme, welche in Folge wieder verknüpft und nacheinander ausgeführt werden können. Dieser Ansatz kann mit den Ansätzen (A) und/oder (B) kombiniert werden. (D) Voll-automatische Programmierung aus der Planung von Roboterbahnen auf Basis von 3D-Sensordaten, welche die tatsächliche Form der Bauteile erfassen, oder auf der Basis von CAD-Daten (z.B. beim Lackieren von Fensterrahmen).

Auch wenn sich mit Teach-in, PDV oder OLP (Ansatz A) Effizienzsteigerungen durch Kombinieren mit den Ansätzen B und C erreichen lassen, ist eine manuelle Programmierung langsam und nur bei sehr hohen Stückzahlen ökonomisch. Die Zerlegung des Werkstücks für die Programmierung in Sektionen oder Teilbereiche (Ansatz B) kann bei geschickter Aufteilung erreichen, dass unter allen entstehenden Teilbereichen auch solche Teilbereiche entstehen, welche für alle Werkstücke gleich sind und daher nur einmal programmiert werden müssen und bei unterschiedlichen Varianten des Werkstücks wiederverwendet werden könnten. Das führt zu einer Reduktion der Größe jener Bereiche, die für verschiedene Varianten verschieden programmiert werden müssen. Dadurch sinken auch die Ausführungsdauer und auch die Programmierdauer je Bereich. Des Weiteren können auch die Anzahl der Kombinationen und damit die Varianten von Roboterprogrammen sinken. Bei N Anbauteilen mit jeweils V Versionen sinkt die Anzahl der Programme theoretisch von maximal *(V*+*1)^{N}* auf S×(*V*+1)^{N/S} (wobei hier eine gleichmäßiger Verteilung der *N* Komponenten auf die S Segmente des Werkstücks angenommen wird, welche vorteilhaft aber zur Aufwandsreduktion nicht zwingend ist). Das heißt, die Anzahl von Programmen, welche alle Kombinationen der Anbauteile abdecken, wird mit dieser Methode teilweise additiv anstatt rein exponentiell aus der Anzahl der Anbauteile bestimmt. Die so bestimmten Programme (Programmteile) können jedoch nicht unabhängig voneinander betrachtet werden. Beispielsweise können Anbauteile in einem Segment Bereiche des benachbarten Segments für das vom Roboter bediente Werkzeug unerreichbar machen oder zumindest den Prozess in dem benachbarten Segment beeinflussen oder auch zu Kollisionen mit dem Roboter führen. In diesen Fällen schlägt der Ansatz B fehl und benachbarte Segmente eines Werkstücks können nicht separat betrachtet werden. Des Weiteren kann das Verbinden der einzelnen Teilprogramme problematisch sein.

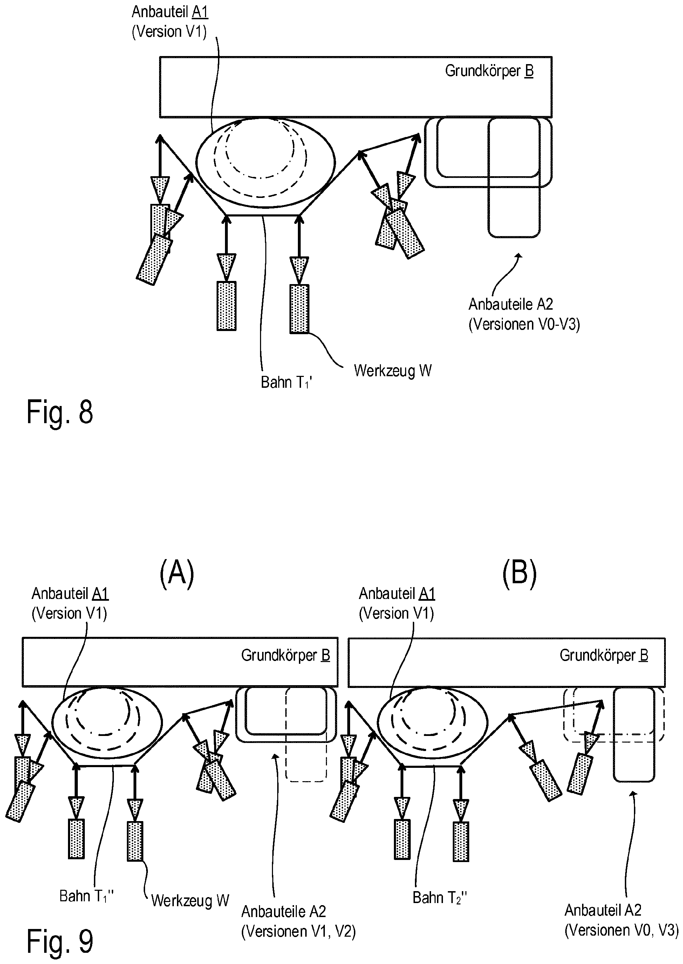

Das Planen von Roboterbahnen einzeln für einzelne Anbauteile (oder auch Komponenten) und Bereiche des Grundkörpers (Trägerstruktur/Rumpf), an dem die Anbauteile befestigt sind, kann die Granularität weiter erhöhen, und somit stärker als bei Ansatz B die Länge der (Teil-) Programme verkürzen (von theoretisch *(X*+*1)^{N}* auf *(X*+*1)×N* Teilprogrammen). Weniger Bahnen erleichtern die Prozessoptimierung. Jedoch auch beim Ansatz C gilt, dass die einzelnen Teilprogramme nicht wirklich voneinander unabhängig betrachtet werden können, da sich benachbarte Anbauteile/Komponenten und Grundkörper im Hinblick auf das Prozessergebnis beeinflussen (vgl. Verdeckung, E-Static etc. beim Lackieren) verschieden beeinflussen. Die Beeinflussung im Hinblick auf die Erreichbarkeit der für die Anbauteile geplanten Bahnen (z.B. aufgrund möglicher Kollision mit anderen Anbauteilen) ist stärker ausgeprägt als bei Ansatz B. Je nach benachbartem Anbauteil (in wechselnden Versionen) muss ein Anbauteil einer bestimmten Version anders bearbeitet werden und anders angefahren werden (siehe Fig. 9-11). Die einzelnen Bahnen müssen untereinander verknüpft werden. Während die Anzahl der Bahnen, welche programmiert werden müssen, sinkt, tritt die Verknüpfung der Bahnen weiterhin mit sehr vielen Kombinationen auf.

Die vollautomatische Programmierung aller Bahnen auf Basis der CAD-Daten oder auf Basis von 3D-Sensordaten kann den Vorteil haben, dass tatsächlich für jedes Werkstück ein oder eine Anzahl von individuell für genau das Werkstück programmierte(s) Programm(e) erstellt werden kann. Für komplexe Werkstücke kann dafür jedoch eine sehr hohe Prozessorleistung erforderlich sein und die erreichbare Qualität ist oft nicht ausreichend. Des Weiteren fehlt es bei der vollautomatischen Programmierung an der Möglichkeit der Verbesserung/Optimierung von Werkstück zu Werkstück durch Experten auf Roboterbahn-Ebene und der Möglichkeit der Wiederverwendung der Optimierungen. Ohne die hier beschriebenen Verbesserungen würden herkömmliche Methoden zur vollautomatischen Roboterprogrammgenerierung extrem viele unterschiedliche Programme erzeugen, die jeweils optimiert werden müssen, was im Ergebnis ineffizient ist.

Die hier beschriebenen Beispiele können als Erweiterung oder Verbesserung der oben genannten Ansätze B, C und D betrachtet werden und sind beispielsweise für eine hohe Anzahl von Varianten eines Werkstücks geeignet. Die Roboterbahnen werden in einer Offline-Programmierumgebung (OLP-Umgebung) werkstück-orientiert geplant und programmiert und das Bearbeitungsergebnis und die kollisionsfreien Bewegungen des Roboters simuliert. Verschiedene Level von Automation sind dabei möglich.

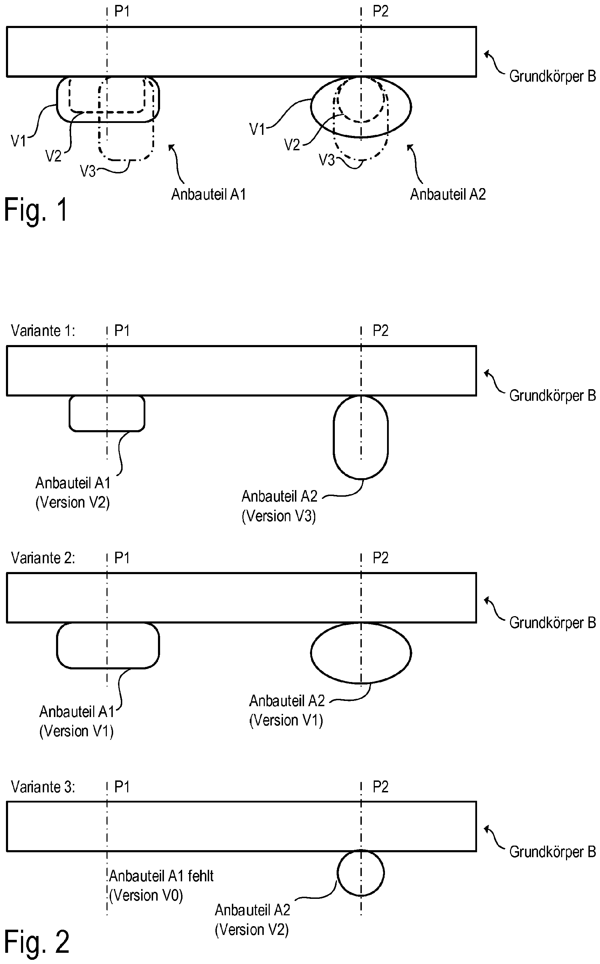

Gemäß den hier beschriebenen Ausführungsbeispielen wird ein System mit einer OLP-Programmierumgebung (auch als OLP-Softwaretool bezeichnet) bereitgestellt, die beispielsweise auf einer Workstation (z.B. ein Personal Computer) ausgeführt werden kann. In der OLP-Programmierumgebung werden die gespeicherten CAD-Modelle mehrerer Werkstücke einer Gruppe von (ähnlichen) Werkstücken geladen. Diese Gruppe von Werkstücken umfasst beispielsweise mehrere Varianten eines Werkstücks. In Fig. 1 und 2 sind exemplarisch mehrere Varianten eines Werkstücks dargestellt. Die unterschiedlichen Varianten entstehen durch Variationen eines Werkstückgrundkörpers, der in den einzelnen Varianten lokal unterschiedliche geometrische Ausprägungen aufweist, die beispielsweise durch verschiedene Versionen von Anbauteilen verursacht werden. Die einzelnen Werkstücke (siehe Fig. 2, "Variante 1", "Variante 2", "Variante 3", etc.) einer Gruppe entsprechen beispielsweise einem Grundkörper B mit jeweils einer unterschiedlichen Kombination von lokalen geometrischen Ausprägungen, z.B. Anbauteilen A1, A2, etc. Als illustratives Beispiel wird ein Grundkörper B, bei dem an vier verschiedenen Positionen P1, P2, P3 und P4 jeweils ein Anbauteil (z.B. ein Tank) angeordnet sein kann (in Fig. 1 und 2 sind der Einfachheit halber nur 2 der vier Positionen gezeigt). Dabei kann es von jedem Anbauteil z.B. drei Versionen geben, d.h. die Versionen V1, V2 und V3 (z.B. unterschiedliche Bauformen und Größen des Tanks), wobei V0 bedeutet, dass an der betreffenden Stelle das Anbauteil weggelassen wird. Das heißt, es für jede der vier Positionen P1, P2, P3 und P4 vier verschiedene Möglichkeiten für das Anbauteil, nämlich "kein Anbauteil" (V0), Version V1 des Anbauteils, Version V2 des Anbauteils oder Version V3 des Anbauteils. Insgesamt ergeben sich damit 4⁴=256 Varianten des Werkstücks, von denen alle oder zumindest mehrere in einer Gruppe von Werkstücken zusammengefasst werden.

Um mit dem obigen Beispiel fortzufahren, es werden in der OLP-Programmierumgebung also die CAD-Modelle des Grundkörpers und alle Versionen (V1, V2 und V3) aller Anbauteile A1, A2, etc. (an den Positionen P1, P2, P3 und P4) geladen. Aus den geladenen CAD-Modellen lassen sich also alle möglichen Werkstückvarianten einer Gruppe von Werkstücken aufbauen. Die CAD-Modelle des Grundkörpers B und der verschiedenen Versionen der Anbauteile (Version V1, V2 und V3 des Anbauteils A1, Version V1, V2 und V3 des Anbauteils A2, etc.) werden miteinander zu einem virtuellen "Maximalmodell" (siehe Fig. 1) verknüpft. Das CAD-Modell dieses Maximalmodells umfasst also den Grundkörper B und alle möglichen Versionen der Anbauteile A1, A2, etc., welche die in der Gruppe von Werkstücken enthaltenen Werkstückvarianten ausmachen. An dieser Stelle sein angemerkt, dass dieses virtuelle Maximalmodell in der Realität in der Regel gar nicht existieren kann, da mehre Werkstückkomponenten oder Anbauteile den gleichen Raum einnehmen würden. Die OLP-Programmierumgebung kann dem Benutzer oder dem Tool (Software) zur automatischen Planung die Möglichkeit bieten, einzelne Versionen von Anbauteilen oder Werkstückkomponenten zu aktivieren (d.h. in das Modell mit aufnehmen) oder zu deaktivieren (d.h. aus dem Modell entfernen).

Das erwähnte dieses Aktivieren und Deaktivieren von Anbauteilen/Werkstückkomponenten dient jedoch nicht dazu, um leicht alle individuellen existierenden Werkstückvarianten zu repräsentieren bzw. darzustellen. Das Aktivieren und Deaktivieren ist stattdessen völlig frei und unabhängig von real existierenden Werkstückkomponenten in der betrachteten Gruppe von Werkstücken. Die von dem OLP-Softwaretool bereitgestellte Methode ermöglicht vielmehr durch Aktivieren und Deaktivieren von Anbauteilen oder Komponenten eines virtuellen Werkstücks die Darstellung von Werkstückvarianten, welche in der Realität gar nicht existieren oder nicht existieren können wie z.B. Mischformen aus real existierenden Varianten, "Worst-Case-Varianten" bzw. Varianten mit maximaler räumlicher Ausdehnung. Dies gilt sowohl für das gesamte Werkstück oder nur für verschiedene Abschnitte des Werkstücks. D.h. es können auch virtuelle Werkstücke dargeboten werden, welche in einem Bereich A der Variante 1 entsprechen und in Bereichen B, C, etc. anderen Varianten als der Variante 1, z.B. Maximalmodelle (alle Versionen der Anbauteile / alle Komponenten) oder Zwischenformen wie z.B. "unvollständige Maximalmodelle" (d.h. Modelle mit weniger Versionen von Anbauteilen als das vollständige Maximalmodell aus Fig. 1, jedoch mit mehr Anbauteilen als die Variante 1) oder eine Variante mit weniger Anbauteilen als die Variante 1 (Zwischenform zwischen der Variante 1 und dem Grundkörper (Minimalmodell)).

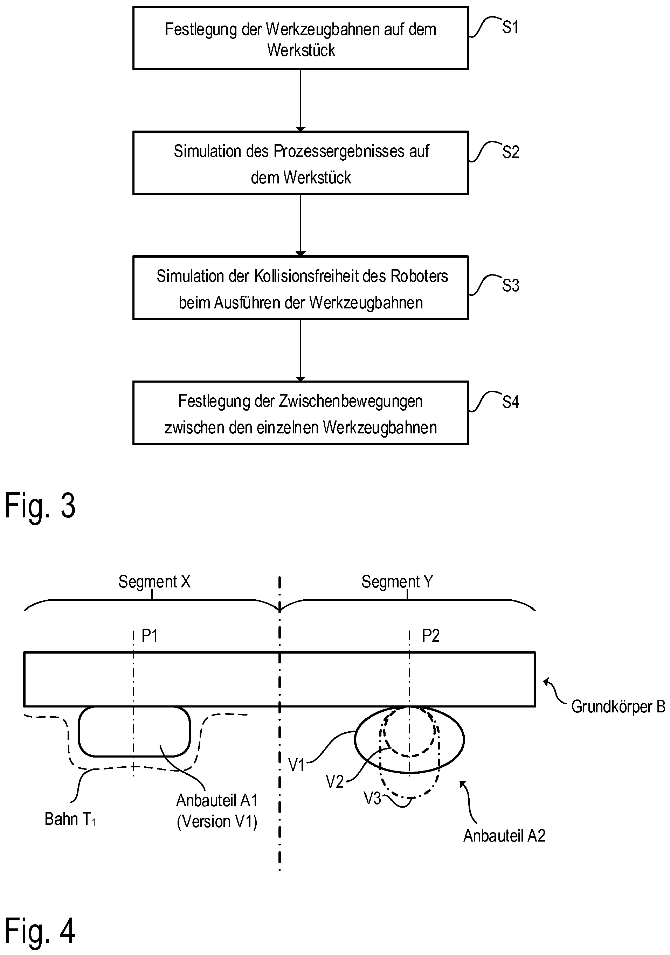

Das in dem OLP-Softwaretool dargestellte Modell des virtuellen Werkstücks, basierend auf dem Roboterprogramme generiert werden, ist nicht notwendigerweise für alle nachfolgenden Schritte/Stufen der Programmierung gleich. Die einzelnen in Fig. 3 dargestellten Schritte/Stufen bei der Erstellung eines Roboterprogramms sind (unter anderem): (S1) die Festlegung der Werkzeugbahnen auf dem Werkstück, (S2) die Simulation des Prozessergebnisses auf dem Werkstück (also z.B. das Ergebnis des Lackiervorganges), (S3) die Simulation der Kollisionsfreiheit des Roboters (inkl. Werkzeug) beim Ausführen der festgelegten Werkzeugbahnen und (S4) die Festlegung bzw. das Planen des Ablaufs (räumlich und zeitlich) der kollisionsfreien Roboterbewegungen auf den Werkzeugbahnen und der Zwischenbewegungen zwischen den einzelnen Werkzeugbahnen.

Die Festlegung der Werkzeugbahnen erfolgt vorteilhaft unterteilt in Segmenten, wobei jene Segmente welche aktuell nicht programmiert werden und/oder bereits programmiert wurden, zumindest für die Kollisionsprüfung (Fig. 3, Stufen S3 und S4) beispielsweise am Maximalmodell mit allen Anbauteilen A1, A2, etc. in allen ihren Versionen V0, V1, V2, V3, etc. gleichzeitig (auch wenn real nicht gleichzeitig möglich) abgebildet werden, sofern brauchbare Werkzeugbahnen im aktuell bearbeiteten Segment gefunden werden können. Wenn dies nicht der Fall ist, müssen die Versionen der Anbauteile in den aktuell nicht programmierten Segmenten in Untergruppen unterteilt werden bis für jede dieser Untergruppen Werkzeugbahnen im aktuellen Segment gefunden sind für die dies möglich ist.

Die Festlegung der Werkzeugbahnen kann im Bereich der Anbauteile für das jeweilige Anbauteil (oder eine Überlagerung von mehreren Anbauteilen) zwar einzeln erfolgen, wobei die Anbauteile jedoch nicht für sich allein, sondern immer im montierten Zustand, d.h. in Kombination mit anderen Anbauteilen und dem Grundköper betrachtet werden. Die Planung und Simulation der Werkzeugbahnen (Fig. 3, Schritt S1) kann beispielsweise bei Robotern mit Zusatzachsen oder bei Werkstücken, welche manipuliert werden, von der Planung und der Simulation des Ablaufs der Roboterbewegung (Fig. 3, Schritte S3 und S4) getrennt werden, um mehrere Werkstückvarianten mit minimaler Anzahl an Werkzeugbahnen bearbeiten zu können. Da bereits ein Roboter allein die gleiche Werkzeugbahn (je nach Kinematik) mit typisch bis zu 2×2×2=8 Konfigurationen/Achsstellungen ausführen kann ("*Elbow Up*", "*Elbow down*",...) steigt bei Verwendung von Zusatzachsen die Anzahl der Achsstellungen, mit denen der Roboter die gleiche Bahn durchführen kann, signifikant an. Damit besteht für eine gefundene/geplante Werkzeugbahn ein Freiheitsgrad für die ausführende Roboterbewegung, mit der sich Kollision mit Anbauteilen in verschiedenen Versionen durch verschiedenen Stellung/Bewegung der Zusatzachsen umgehen lassen.

Die hier beschriebene Vorgehensweise kann in vielen Anwendungen Vorteile mit sich bringen. Durch die Programmierung jedes Anbauteils "im montierten Zustand" (am virtuellen Werkstückmodell montiert) werden nur jene Bereiche bearbeitet, welche auch real vom Roboter erreichbar sind. Bei der Festlegung der Werkzeugbahnen für ein bestimmtes Segment des virtuellen Werkstückmodells (z.B. des Maximalmodells) können bei den jeweils anderen Segmenten z.B. alle möglichen Anbauteile in all ihren möglichen Versionen aktiviert werden (Maximalmodell). Die Versionen der Anbauteile können dabei einen sich überlappenden Raum belegen, d.h. in Realität unmöglich sein, aber die Roboterbewegungen sind garantiert kollisionsfrei. Diese Situation ist in Fig. 4 skizziert. In dem dargestellten Beispiel wird in Segment X des Werkstückmodells eine Werkzeugbahn T₁ für eine konkrete Version V1 des Anbauteils A1 geplant (vgl. auch Schritt S 1 der Programmerstellung gemäß Fig. 3). Für die Prozesssimulation und die Kollisionsprüfung (vgl. auch Schritte S2 und S3 der Programmerstellung gemäß Fig. 3) der geplanten Werkzeugbahn T₁ wird in allen anderen Segmenten (außer Segment X) das Maximalmodell betrachtet, um eventuelle Abhängigkeiten mit zu berücksichtigen. Wenn eine kollisionsfreie Ausführung der Werkzeugbahn T₁ möglich ist und die simulierte Prozessqualität für das virtuelle Maximalmodell in Ordnung ist, dann muss für dieses Anbauteil A1, Version 1, nur eine einzige Subprogrammversion oder Summe von Werkzeugbahnen definiert werden, für alle möglichen Kombinationen, mit denen das Anbauteil und anderen Komponenten auftreten. Das bedeutet eine massive Reduktion an Programmieraufwand, weil sich die Anzahl möglicher Kombinationen deutlich verringert, sowie eine massive Reduktion im nachfolgenden Optimierungsaufwand, weil weniger Programme generiert werden, welche optimiert werden müssen. Ist das nicht möglich werden die Versionen der Anbauteile in Segment Y schrittweise weiter in Gruppen unterteilt bis dies (für die einzelnen Gruppen) möglich ist. Dabei wird eine höhere aber weiterhin minimale Anzahl an Programmen erzeugt. Es sei angemerkt, dass nicht nur in anderen Segmenten (z.B. Segment Y) - sofern möglich - für die Anbauteile alle Varianten gleichzeitig berücksichtigt werden sollen, sondern auch im selben Segment X sollen jene Anbauteile, welche aktuelle nicht betrachtet werden, im Rahmen des Maximalmodell berücksichtigt werden. Das hängt natürlich davon ab, wie man die Segmentgrenzen festlegt.

In dem in Fig. 4 dargestellten Fall müssen für die Versionen V0, V1, V2 und V3 des Anbauteils A1 nur noch vier Subprogramme (kollisionsfreie Werkzeugbahnen mit ausreichender (simulierter) Prozessqualität) bereit gehalten werden, weil sämtliche Kombinationen von Anbauteilen in anderen Segmenten für die Kollisionsprüfung in dem virtuellen Maximalmodell zusammengefasst sind. Wenn eine kollisionsfreie Ausführung der Werkzeugbahn T₁ für das Maximalmodell nicht möglich ist oder die simulierte Prozessqualität für das virtuelle Maximalmodell nicht in Ordnung ist, kann statt des Maximalmodells ein unvollständiges Maximalmodell (d.h. mehrere Kombinationen der Anordnung von Anbauteilen) in den aktuell nicht programmierten Segmenten (z.B. Segment Y) verwendet werden, wodurch die Anzahl der Programme dennoch stark reduziert wird, und die geplanten Bahnen weiterhin garantiert kollisionsfrei sind. In den dargestellten Beispielen ist in jedem Segment nur ein Anbauteil vorhanden. Wenn in einem aktuell bearbeiteten Segment X mehrere Anbauteile vorhanden sind, kann auch in Segment X für aktuelle nicht betrachtete Anbauteile das Maximalmodell "aktiviert" werden.

Durch das Aktivieren/Deaktivieren (Einblenden/Ausblenden) verschiedener Anbauteile kann die aktuell untersuchte (virtuelle) Werkstückvariante gleichzeitig mit weiteren Versionen der Anbauteile betrachtet werden. Das heißt, es können Werkzeugpfade und später die daraus abgeleiteten Roboterbewegungen) gleich für mehrere gleichzeitig repräsentierte Versionen eines Anbauteils (alle Versionen oder eine Untermenge der möglichen Versionen eines Anbauteils) gleichzeitig geplant (vollautomatisch, interaktiv oder manuell) und oder definiert werden (z.B. projiziert werden) und simuliert werden (Prozessergebnis, Kollisionsfreiheit) oder auch nur zur Unterstützung des Programmierers visualisiert werden ohne in der Simulation oder sonst berücksichtigt zu werden.

Ein menschlicher Programmierer kann sich z.B. zwei oder mehr Versionen (V0, V1, V2, etc.) eines Anbauteils (z.B. in unterschiedlicher Farbe und/oder unterschiedlicher Transparenz) darstellen lassen und so gleichzeitig die Werkzeugbahnen für mehrere Versionen (von Prozessergebnis, von der Kollisionsfreiheit oder Erreichbarkeit) optimieren, um bei reduzierter Anzahl zu programmierender Varianten (Reduktion der Kombinatorik durch Zusammenfassung/Überlagerung mehrere Werkstückvarianten) einen guten Kompromiss im Ergebnis zu erzielen.

Ein automatische Programmierung oder Optimierung kann mehrere oder alle Versionen der Anbauteile für die Programmierung oder Optimierung in gleicher oder unterschiedlicher Gewichtung mit einbeziehen und somit Kompromiss-Bahnen für mehrere Varianten erreichen (was weniger Subprogramme zur Folge hat) ohne über alle CAD-Modelle aller Werkstückvarianten iterieren zu müssen. Für die Kollisionsprüfung können gleich mehrere oder alle (Maximalmodell) Versionen des Anbauteils mit betrachtet werden, was die Programmierung schneller und das Ergebnis zuverlässiger macht.

Gemäß den hier beschriebenen Beispielen, wonach andere als die aktuell bearbeiteten Segmente (vgl Fig. 4, Segmente X, Y, Ansatz B) oder Anbauteile (Ansatz C) nicht in ihrer individuellen Erscheinungsform der aktuell zu bearbeitenden Varianten, sondern z.B. als Maximalmodell berücksichtigt werden, erreicht man, dass die benachbarten Segmente bzw. Anbauteile tatsächlich voneinander unabhängig betrachtet werden können, wodurch die Anzahl möglicher Kombinationen und damit nötigen (Werkzeugbahnen und die daraus resultierenden) Programme deutlich reduziert werden. Ganz allgemein bedeutet das, bei N Anbauteilen mit V Versionen sinkt die Anzahl der Programme nicht nur theoretisch (falls die Bahnen zufällig in allen Kombinationen erreichbar und kollisionsfrei sind), sondern wie erwähnt auch tatsächlich von maximal (V+1)^{N} auf S× (V+1)^{N/S} (wobei hier eine gleichmäßiger Verteilung der N Komponenten auf die S Segmente bzw. Anbauteile angenommen wird, welche vorteilhaft, jedoch zur Aufwandsreduktion nicht zwingend ist).

Die Planung (Festlegung) und Simulation der Werkzeugbahn kann von der Simulation der zur Ausführung der Werkzeugbahnen notwendigen Roboterbewegung (für die Prüfung der Kollisionsfreiheit) getrennt werden. Das kann insbesondere bei Robotern mit Zusatzachsen oder bei mittels Manipulatoren positionierbaren Werkstücken Vorteile bringen. Für verschiedene Versionen der nicht aktuell betrachteten Anbauteile, kann dieselbe Werkzeugbahn mehrfach verwendet werden auch wenn diese mit dem Roboter nicht mit allen anderen Kombinationen an Anbauteilen mit derselben Roboterbewegung erreichbar ist; lediglich die Stellung der Zusatzachsen muss für andere "eingeblendete" Anbauteile verändert werden, um nicht zu kollidieren - damit sinkt die Zahl der zu optimierenden Werkzeugbahnen und Kombinationen. Das heißt, wenn der Roboter durch eine andere spätere Wahl der Stellung der Zusatzachse in einer anderen Position relativ zum Werkstück steht, wird die Werkzeugbahn nur unwesentlich in ihrer Ausführung abweichen obwohl sich die Roboterachsen komplett anders bewegen (der Roboter steht z.B. seitlich vor oder seitlich hinter dem Anbauteil), wodurch eine Kollisionsvermeidung mit verschiedenen Anbauteilen durch verschiedene Stellung der Zusatzachsen erreicht werden würde. Die aufwändig (oft über Versuche in der Roboterzelle und am Beispiel Lackieren durch Messung der erreichten Schichtstärke) zu optimierende Werkzeugbahn ist damit für verschiedene Anbauteile gleich, und Optimierungen können für alle Programme bzw. alle Varianten von Anbauteilen mit der gleichen Werkzeugbahn verwendet werden, und lediglich die Roboterbewegung selbst ist unterschiedlich. Diese kann aber ohne (z.B. Lackier-) Versuche automatisch kollisionsfrei geplant werden.

Generell ermöglicht die hier beschriebene Vorgehensweise (durch die reduzierte Anzahl an Kombinationen von Anbauteilen) einen einfachen Aufruf und die automatische Verknüpfung der Subprogramme (für verschiedene Versionen von Anbauteilen) durch eine von dem OLP-Softwaretool durchgeführte automatische Bewegungsplanung. Durch die geringere Anzahl von Programmen/Werkzeugbahnen ist eine schnellere Optimierung der Werkzeugbahnen und Programme im Betrieb möglich. Die hier beschriebenen Beispiele sind auch bei vollautomatischer Planung der Werkzeugbahnen anwendbar. In diesem Fall wird der Rechenaufwand für die Programmerstellung signifikant reduziert und insbesondere der Aufwand für eine spätere Optimierung der Werkzeugbahnen reduziert, da auch die Anzahl der Programme und Werkzeugbahnen, welche zu optimieren sind, signifikant geringer ist. Je nach Menge der Werkstückvarianten wird Bahnplanung, Programmerstellung und ggf. Optimierung durch die hier beschriebenen Vorgehensweise überhaupt erst in realistischer Zeit möglich.

Anders als bei der "klassischen" OLP-Programmierung wird bei der Programmerstellung die Stufe der Festlegung der Werkzeugbahnen (vgl. Fig. 3, Stufe S1) und die darauffolgende (automatische) Bewegungsplanung (räumlich und zeitlich) der Roboter (inkl. Prüfung der Kollisionsfreiheit) nicht am gleichen (CAD-) Modell durchgeführt. Die Kosten in der Produktion für die Programmierung und Optimierung von Roboterprogrammen betreffen vor allem die Definition und Wartung (Optimierung) von Programmen und der darin enthaltenen Werkzeugbahnen. Gerade bei komplexen, nicht einfach zu simulierenden, Prozessen wie z.B. Lackieren ist vergleichsweise viel Zeit für das Definieren und Optimieren der Bahnen erforderlich, mehr als für die Optimierung der zu ihrer Ausführung nötigen Roboterbewegung (Bahn und Konfiguration, und Stellung von Zusatzachsen). Hier kann die erwähnte Loslösung der Festlegung der Werkzeugbahnen (für eine "virtuelle" Variante des Werkstücks) von der darauf folgenden z.B. automatischen Bewegungsplanung (mit anderen Varianten des Werkstücks, z.B. dem Maximalmodell) im Vergleich zu einer Definition der Bewegungen des Roboters wie im klassischen OLP, besonders vorteilhaft sein, da der zweite Teil - die Bewegungsplanung - sehr gut simuliert und geplant werden kann, die Werkzeugbahn selber aber, trotz Simulation des Sprühauftrags (im Fall eines Lackierprozesses) immer noch gemäß real erfolgtem Sprühauftrag analysiert und optimiert werden muss (aufgrund Unzulänglichkeiten der Prozesssimulation bei komplexen Prozessen und Werkstückgeometrien).

Durch die erwähnte Trennung zwischen Definition der Werkzeugbahnen und (zeitlicher und räumlicher) Bewegungsplanung der Roboter, insbesondere in Verbindung mit dem oben beschriebenen Ansatz, gleich mehrere Versionen der Anbauteile (im gleichen und/oder in verschiedenen Segmenten), welche nicht von der zu optimierenden Werkzeugbahn bearbeitet werden, gleichzeitig zu berücksichtigen, kann eine Werkzeugbahn in vielen Programmen (mit oft verschiedenen Achsstellungen der Roboter) und für sehr vielen Varianten verwendet werden. Dadurch kann nach der ersten Werkstückvariante, in der diese Werkzeugbahn verwendet wird, nicht nur ein Programm oder eine Roboterbewegung für eine Variante optimiert werden kann, sondern eine Werkzeugbahn, welche bei weiteren Varianten eingesetzt werden kann, während die eigentliche Bewegung des Roboters (Roboterprogramm) zur Ausführung dieser Werkzeugbahn z.B. automatisch für alle Varianten berechnet werden kann, wobei (manuell oder automatisch) die Berücksichtigung mehrerer Versionen von Anbauteilen, und damit viele Varianten des Werkstücks auf einmal optimiert werden.

In engen Roboterzellen ist das Finden der Bewegung schwieriger bzw. für automatische kollisionsfreie Bewegungsplanung rechenaufwändiger. Hier reduziert die Verwendung der überlagerten Anbauteile nicht die Komplexität der Findung der Roboterbewegung, sondern reduziert durch die Verwendung für mehrere Versionen der Anbauteile auch die Anzahl der erforderlichen Aufrufe der Planung.

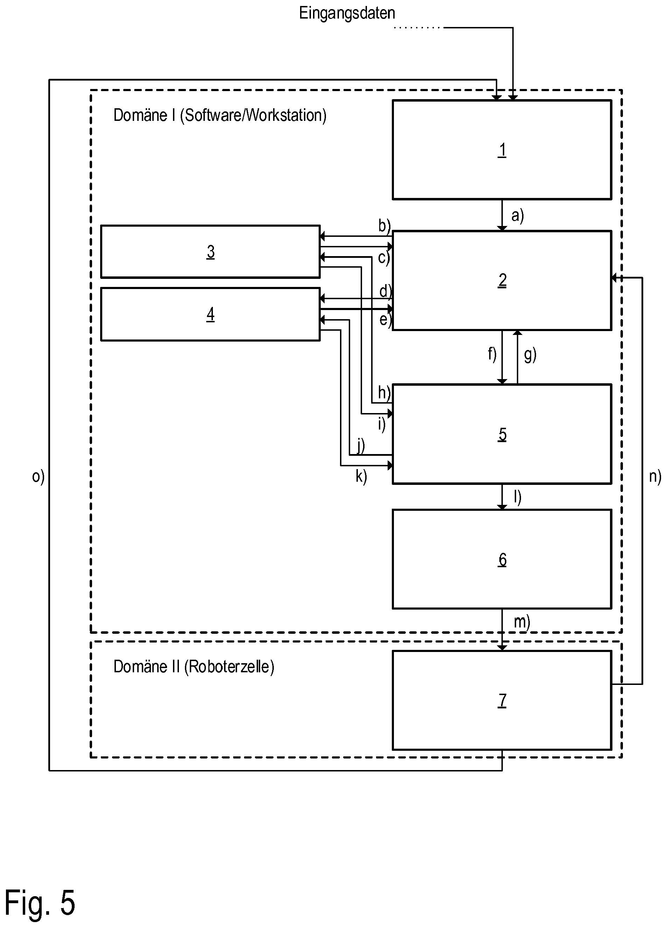

Ein Beispiel einer klassischen OLP-Programmierung wird im Folgenden anhand des Blockdiagrams in Fig. 5 näher erläutert. Die mit I bezeichnete Domäne umfasst (unter anderem) Module 1-6, die als Software auf einer Workstation implementiert sind. Diese Module 1-6 werden also von einem Software-Tool (Programmier-Tool) bereitgestellt, das automatisch oder auch interaktiv mit einem Bediener den Prozess (z.B. Lackieren der Werkstückoberfläche) und die (räumliche und zeitliche) Bewegung des Roboters plant und auf einer Robotersteuerung ausführbare Roboterprogramme (Bewegungsbefehle, Parameter, Signale, ...) generiert. Die mit II bezeichnete Domäne repräsentiert die Roboterzelle mit einer Robotersteuerung, mindestens einem Roboter, an dem ein Werkzeug montiert ist (am TCP des Roboters). Der/die Roboter bearbeitet/n ein oder mehre Werkstücke. Alternativ kann der Roboter das Werkstück halten und relativ zu dem Werkzeug bewegen, welches in diesem Fall nicht am Roboter montiert ist, sondern an der Zelle, an einem weiteren Aktuator oder einem weiteren Roboter. Der Roboter mit Werkzeug wird in Fig. 5 durch das Modul 7 repräsentiert.

Die dem Modul 1 zugeführten Eingangsdaten repräsentieren im Wesentlichen die CAD-Daten des Grundkörpers B (vgl. Fig. 1) der Werkstückvarianten und sämtlicher Anbauteile A1, A2, etc. (in sämtlichen Versionen V1, V2, etc.), sowie weitere Parameter, die das Ziel der Oberflächenbearbeitung (den Soll-Zustand der konkreten Werkstückvariante nach der Bearbeitung) repräsentieren und CAD-Daten zur Roboterzelle. Das Modul 1 repräsentiert eine Schnittstelle (z.B. Mensch-Maschine-Schnittstelle, User-Interface, Maschine-Maschine-Schnittstelle, etc.) zum Laden der Werkstückbeschreibung einer einzelnen Variante oder zum Laden der Werkstückbeschreibung des Grundkörpers und der Anbauteile, die zu der gewünschten Werkstückvariante zusammengefügt werden können durch Kombinieren von Grundkörper und einer bestimmten Kombination von Anbauteilen. Das Werkstück wird dann in einer virtuellen Roboterzelle positioniert.

Modul 2 stellt Funktionen zur Verfügung zum manuellen, halbautomatischen oder automatischen Festlegen/Definieren von Werkzeugbahnen oder Gruppen von Werkzeugbahnen für ein Werkstück (oder einem Teil davon), welches einer real existierenden Werkstückvariante entspricht. Es kann eine graphische Schnittstelle zum Darstellen der Simulationsergebnisse (Modul 3 und 4) vorgesehen sein. Modul 3 stellt Funktionen zur Verfügung zum Verifizieren (mittels Simulation) der Kollisionsfreiheit von Werkzeugbahnen (aus Modul 2) und den Roboterbewegungen (des gesamten Roboters) (aus Modul 5), die zur Ausführung der Werkzeugbahnen notwendig sind. Eine Visualisierung der Simulation ist möglich, sodass neben einer automatischen Erkennung von Kollisionen auch eine bildliche Darstellung der Kollision für den Bediener ermöglicht wird. Die Simulation kann in zwei Stufen erfolgen, wobei zunächst nur die Bewegung des Werkzeugs entlang der festgelegten Bahn simuliert und auf Kollisionsfreiheit geprüft wird. Im nächsten Schritt können dann die notwendigen Roboterbewegungen inklusive deren zeitlichen Ablauf automatisiert berechnet und die Kollisionsfreiheit der geplanten Roboterbewegungen mittels Simulation verifiziert werden.

Modul 4 stellt Funktionen zur Verfügung zum Simulieren des Prozesses, insbesondere des Prozessergebnisses (z.B. die Dicke der Lackschicht im Falle eines Lackierprozesses), für den geplanten Fall, dass das Werkzeug (z.B. Sprühpistole) entlang der vorher festgelegten Werkzeugbahnen bewegt wird. Das Modul enthält also einen Prozesssimulator, der ein Prozessmodel für die Simulation verwendet und mit Hilfe dieses Prozessmodells das Prozessergebnis auf einem Werkstück für (eine oder mehrere) geplante/optimierte Werkzeugbahnen simulieren kann. Das Prozessmodel beinhaltet die für die Simulation benötigten Informationen. Im Fall des Lackierens sind diese Informationen beispielsweise das Sprühbild der Sprühpistole, Minimal- und Maximalabstand der Sprühpistole zur Oberfläche, gewünschte minimale und maximale Schichtstärke, E-Statik etc.

Modul 5 stellt Funktionen für die (räumliche und zeitliche) Bewegungsplanung des Roboters und ggf. vorhandener Zusatzachsen zur Verfügung, sowohl für die Bewegung entlang einer Werkzeugbahn, als auch zwischen den einzelnen Werkzeugbahnen (also vom Ende einer Bahn zum Beginn der nächsten). Diese Planung kann manuell, halbautomatisch oder vollautomatisch erfolgen.

Modul 6 stellt Funktionen zum Exportieren der Roboterprogramme für eine Werkstückvariante oder eine Gruppe von Varianten zur Verfügung. Vorteilhaft mit Programmnamen oder anderer eindeutiger Identifikation (z.B. Produktnummer), welche den automatischen Aufruf aus einem Fertigungsmanagementsystems (Manufacturing Execution System, MES) oder ähnlich erlauben. Die exportierten Programme werden für einen späteren Aufruf oder eine spätere Wiederverwendung gespeichert. Modul 7 repräsentiert den Roboter samt Robotersteuerung zum Ausführen der zuvor generierten Roboterprogramme, wobei die tatsächliche Ausführung und das tatsächlich erzielte Prozessergebnis bewertet werden können sowohl nach Ausführung des Prozesses (z.B. beim Lackieren durch Messung der Schichtdicken an definierten Punkten sowie optischer Kontrolle nach Läufern und stellen mit zu wenig Farbauftrag) als auch während dessen Ausführung (z.B. beim Nahtabdichten/Schweißen durch einen Sensor hinter dem Werkzeug)..

In Fig. 5 ist der Datenfluss zwischen den einzelnen Modulen mit Buchstaben a) bis o) bezeichnet. Buchstabe a) repräsentiert die Beschreibung des zu bearbeitenden Objektes (einer spezifischen Werkstückvariante) und der Roboterzelle, für die die Programmierung durchgeführt werden soll. Buchstabe b) repräsentiert die festgelegten Werkzeugbahnen mit Parametern wie z.B. TCP-Geschwindigkeit, Prozessparameter wie Überschleifwerte, Brush-Wert, Sprühpistole an/aus, etc. und Beschreibung des zu bearbeitenden Objektes (einer spezifischen Werkstückvariante) und der Roboterzelle (oder nur Werkstück und Werkzeug), für welche die Kollisionsprüfung durchgeführt werden soll. Buchstabe c) repräsentiert das Ergebnis der Kollisionsprüfung für die an die Kollisionsprüfung übergebenen Werkzeugbahnen. Mögliche Rückgabewerte sind "Kollision", "keine Kollision" und im Falle einer Kollision konkrete Informationen über Ort und Zeit der Kollision (entlang welcher Bahn tritt die Kollision auf, wann tritt sie auf und an welchem Punkt, welche Objekte kollidieren, etc.).

Buchstabe d) repräsentiert die festgelegten Werkzeugbahnen mit Parametern (z.B. TCP-Geschwindigkeit, Prozessparameter wie Überschleifwerte, Brush-Wert, Sprühpistole an/aus, etc.) und Beschreibung des zu bearbeitenden Objektes (einer spezifischen Werkstückvariante) und der Roboterzelle (oder nur Werkstück und Werkzeug), für die die Prozesssimulation (z.B. Simulation des Lackiervorgangs) durchgeführt werden soll. Dabei kann der Beitrag der einzelnen Werkzeugbahnen zum Prozessergebnis berücksichtigt werden. Buchstabe e) repräsentiert das simulierte Prozessergebnis bzw. den Beitrag zum Prozessergebnis für die an die Simulation übergebenen Werkzeugbahn(en) (Buchstabe d). Das Prozessergebnis kann beispielsweise die Dicke einer Lackschicht sein.

Buchstabe f) repräsentiert die durch Modul 2 geplanten und durch die Module 3 und 4 mittels Simulation verifizierten Werkzeugbahnen für eine konkrete Werkstückvariante. Buchstabe g) repräsentiert das Ergebnis der Simulation/Verifikation der resultierenden Roboterbewegungen aus Modul 5, falls ein Problem erkannt wird, welches eine Anpassung der Werkzeugbahnen durch Modul 2 erfordert. Beispielsweise kann eine geplante Werkzeugbahn bei der Ausführung durch den Roboter eine Kollision verursachen (z.B. ein anderer Roboter kollidiert mit dem Roboter, der die betrachtete Werkzeugbahn ausführt, oder der Roboter, der die betrachtete Werkzeugbahn ausführt, kann - nicht vermeidbar - mit der Umgebung kollidieren oder zu nahe an einer Singularität verlaufen). Die Buchstaben h), i), j) und k) entsprechen im Wesentlichen den Buchstaben b), c), d) bzw. e), wobei bei der zweiten Simulation in den Modulen 3 und 4 nicht nur die Bewegung des Werkzeugs entlang der geplanten Werkzeugbahnen und das dabei erzielte Prozessergebnis simuliert wird, sondern die komplette Bewegung des Roboters, der das Werkzeug entlang den geplanten Bahnen bewegt, ggf. zusammen mit anderen Robotern und Maschinen in der Roboterzelle und ggf. mit Abweichungen von der geplanten Bahn aufgrund von Besonderheiten des Roboters (Überschleifen, Geschwindigkeitsabweichungen, Massen/Dynamik, etc.).

Buchstabe 1) repräsentiert die geplanten und mittels Simulation (Bewegungssimulation in Modul 3 und Prozesssimulation in Modul 4) verifizierten Werkzeugbahnen (inkl. der Geschwindigkeit des Werkzeugs). Buchstabe m) repräsentiert die Übergabe eines ausführbaren Roboterprogramms (Bewegungsbefehle, Parameter, Signale etc.) an die Robotersteuerung (Modul 7). Buchstabe n) repräsentiert eine Rückmeldung für den Fall, dass bei der realen Ausführung des Roboterprogramms ein Problem auftritt (z.B. das Prozessergebnis unzureichend ist). Buchstabe o) repräsentiert den Rücksprung zum Anfang für die Programmerstellung für die nächste Werkstückvariante.

Die Darstellung in Fig. 5 illustriert einerseits die Aufteilung der einzelnen Schritte/Stufen der Programmerzeugung auf verschiedene Module, repräsentiert jedoch auch den in Fig. 3 dargestellten Ablauf detaillierter. Schließlich sei noch erwähnt, dass die Module 2 und 5 auch in einem Modul zusammengefasst werden können. In diesem Fall erfolgt die Planung und Verifizierung der Werkzeugbahnen als solche und der zugehörigen Roboterbewegung nicht separat, sondern es werden gleich die Roboterbewegungen zu den einzelnen Bahnen ermittelt und mittels Simulation verifiziert. Wichtig ist noch zu erwähnen, dass bei der "klassischen", in Fig. 5 dargestellten Programmgenerierung immer nur eine konkrete Werkstückvariante (Grundkörper B mit einer konkreten Kombination von Versionen von Anbauteil A1, A2, etc.) betrachtet wird und der gesamte Ablauf für jede einzelne Werkstückvariante wiederholt (vgl. Fig. 5, Buchstabe o) werden muss. Dabei kann auch in der "klassischen" Variante (in Fig. 5 dargestellt) vorteilhaft geprüft werden, ob eine für eine einzelne Variante geplantes Programm (bzw. eine für eine einzelne Variante geplante Bahn) für eine andere Variante verwendet werden kann, wobei aufgrund des nicht gleich mitberücksichtigten Wechselspiels von Prozess und Bewegung der Anteil der verwendbaren (oder ohne Anpassungen verwendbaren) Programme oder Werkzeugbahnen in der Regel niedrig ist.

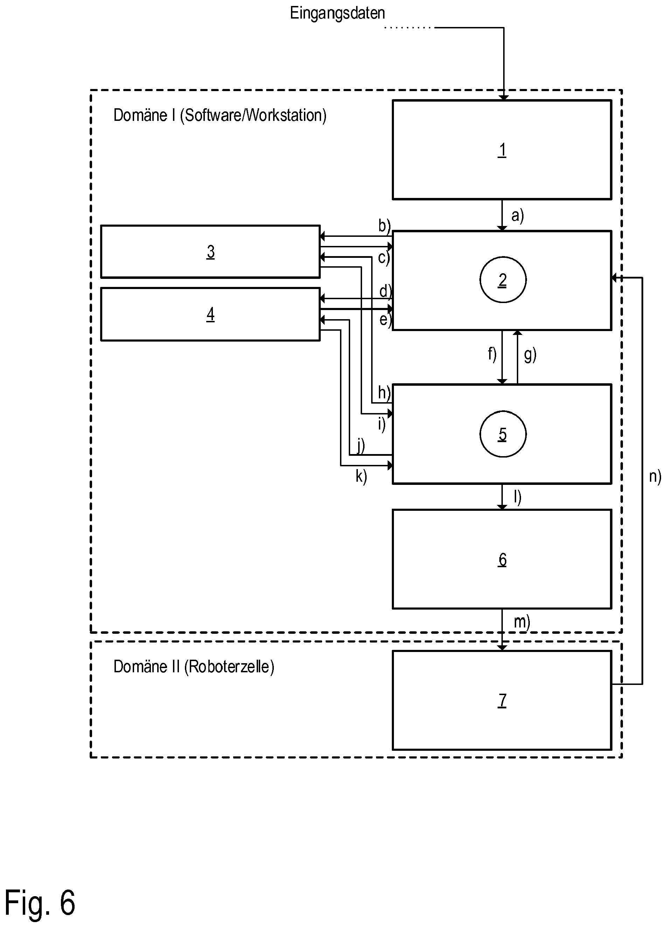

Ein Beispiel einer gemäß den hier beschriebenen Ansätzen verbesserten OLP-Programmierung wird im Folgenden anhand des Blockdiagrams in Fig. 6 näher erläutert. Die dargestellten Module 2-7 sind im Wesentlichen die gleichen wie in dem Beispiel aus Fig. 5. Der Unterschied besteht insbesondere darin, dass für die Planung der einzelnen Werkzeugbahnen und die Simulation der Bewegung und des Prozesses nicht dieselben CAD-Modelle derselben Werkstückvariante verwendet werden. In Bezug auf die Domänen I und II (Software/Workstation und Roboterzelle) wird auf die Beschreibung zu Fig. 5 Bezug genommen. Im Folgenden wird in erster Linie auf die Unterschiede der anhand von Fig. 5 und Fig. 6 dargestellten Methoden eingegangen.

Zunächst wird ein virtuelles Werkstück generiert indem (z.B. CAD-) Modelle mehrerer Werkstückvarianten eines Werkstücks kombiniert werden. Eingangsdaten sind wiederum z.B. CAD-Daten, welche die Werkstückvarianten definieren und der gewünschte Soll-Zustand nach der Bearbeitung durch den Roboter. Das Modul 1 ist dazu ausgebildet, die Werkstückbeschreibung (CAD-Modelle) als Einzelkomponenten (z.B. das Modell des Grundkörpers und aller Anbauteile) zu laden und alle Komponenten in allen Werkstückvarianten zu verknüpfen, um das bereits weiter oben erläuterte virtuelle Maximalmodell darzustellen. Das heißt, es werden - anders als im Beispiel gemäß Fig. 5 - nicht konkrete Werkstückvarianten durch eine konkrete Kombination von Anbauteilen mit dem Grundkörper erstellt, sondern nicht real existierende, virtuelle Werkstücke durch Überlagerung einer Vielzahl von Versionen von Anbauteilen (oder auch unterschiedliche Versionen des Grundkörpers). Das Modell wird virtuell in der virtuellen Roboterzelle positioniert. Unabhängig davon, ob das Modell vollständig (alle Varianten abdeckend, Maximalmodell) oder unvollständig (nur einen Teil möglicher Varianten abdeckend) ist, werden in jedem mehrere zu bearbeitende Werkstückvarianten überlagert und zu einem virtuellen Werkstück verknüpft. Einzelne Versionen einzelner Anbauteile lassen sich gezielt aktivieren (einblenden und zu dem virtuellen Werkstück hinzufügen) oder deaktivieren (aus dem virtuellen Werkstück entfernen und ausblenden). Es sei an dieser Stelle noch einmal angemerkt, dass bei dem virtuellen Werkstück mehrere Anbauteile oder Versionen davon denselben Raum einnehmen können.

Modul 2 repräsentiert ein Modul zum manuellen, interaktiven oder automatischen Definieren/Planen von Werkzeugbahnen oder Gruppen von Werkzeugbahnen für verschiedene Kombinationen von Anbauteilen, die nicht notwendigerweise existierenden Werkstückvarianten entsprechen. Für jeden Werkzeugbahn oder Gruppe von Werkzeugbahnen (und damit für jeden Bereich eines Werkstücks, den die Werkzeugbahnen abdecken sollen) kann definiert werden, welche der Anbauteile "aktiviert" werden, d.h. bei den Simulationen (für die Kollisionsprüfung und Prozesssimulation) berücksichtigt werden sollen und welche nicht. Das heißt, erst an dieser Stelle kommen die konkreten Varianten oder Gruppen von Varianten ins Spiel, denen die geplanten Werkzeugbahnen zugeordnet sind. Eine Werkzeugbahn oder Gruppe von Werkzeugbahnen kann für eine lokale Ausprägung von verschiedene Varianten (z.B. verschiedene Versionen eines Anbauteils) optimiert, simuliert und verifiziert werden und kann dann gleich mehreren Werkstückvarianten (lokal) zugeordnet werden, während bei anderen Anbauteilen (im selben oder in anderen Segmenten) vorzugsweise nicht die CAD Beschreibung einer Variante verwendet wird, sondern die Überlagerung aller Variationen der Anbauteile (d.h. maximale Ausprägung, Worst Case Ausprägung) oder Untermenge aus allen Varianten, sofern keine Lösung für alle gefunden wird. Dadurch wird sichergestellt, dass es für alle anderen Anbauteile zu keiner Kollision oder negativer Beeinflussung (Verdeckung) kommt, wodurch die die Anzahl jener Kombinationen signifikant reduziert werden, für die Werkzeugbahnen in einer (lokalen) Region des Bauteils (d.h. Segment oder Teil eines Segments oder Anbauteil mit Umgebung des Werkstücks) definiert/geplant werden müssen. Es kann eine graphische Schnittstelle zum Darstellen der Ergebnisse der Simulationen vorgesehen sein.

Betreffend die Module 3 und 4 wird auf die Beschreibung zu Fig. 5 verwiesen. Die Simulation der Werkzeugbahnen kann wieder zweistufig (erst nur die Bewegung des Werkzeugs und dann die gesamte Roboterbewegung inkl. deren zeitlichen Ablauf) oder einstufig (nur die zu den geplanten Bahnen gehörende Roboterbewegung) erfolgen. Für die Simulation wird zumindest in manchen Segmenten oder Regionen des Werkstücks nicht eine konkrete Variante, sondern eine Überlagerung mehrerer (oder aller) Varianten (d.h. ein virtuelles Werkstück) berücksichtigt. Das gleiche gilt für die Simulation des Bearbeitungsprozesses. An dieser Stelle sei noch mal erwähnt: die Anzahl der im virtuellen Werkstück überlagerten geometrischen Ausprägungen (z.B. Anbauteile) ist in einem Bereich, für den aktuell die Planung (und Verifikation) der Werkzeugbahnen durchgeführt wird, eine andere (in der Regel kleinere, im Grenzfall eins), als in den übrigen Bereichen (desselben Segments oder anderer Segmente) des virtuellen Werkstücks (für die zwar aktuell keine Bahnen geplant werden, die jedoch bei der Verifikation/Simulation berücksichtigt werden). Im Grenzfall wird in den übrigen Bereichen eine Überlagerung aller geometrischen Ausprägungen des Werkstücks (d.h. das Maximalmodell) berücksichtigt.

In dem Beispiel aus Fig. 6 dient das Modul 5 zum Definieren (d.h. Planen) von kollisionsfreien Roboterbewegungen (inkl. deren zeitlichen Ablauf), welche die zuvor mit Hilfe von Modul 2 geplanten Werkzeugbahnen ausführen. Es ist zu beachten, dass das virtuelle Werkstück, das in Modul 2 für die Planung der Werkzeugbahnen verwendet wird, nicht notwendigerweise das gleiche ist, wie das virtuelle Werkstück, das für die (z.B. automatisierte) Planung der Roboterbewegung verwendet wird. Das heißt, die Werkzeugbahnen werden basierend auf einer (virtuellen, nicht notwendigerweise realisierbaren) Kombination von Grundköper und Anbauteilen geplant, und die für die Ausführung dieser Werkzeugbahnen notwendigen Roboterbewegungen werden basierend auf einer anderen (virtuellen, nicht notwendigerweise realisierbaren) Kombination von Grundköper und Anbauteilen geplant. Dabei können folgende Situationen auftreten: (i) das virtuelle Werkstück kann für die Planung der Roboterbahnen mehr Versionen der Anbauteile aufweisen als bei der Planung der Werkzeugbahnen, um die Sicherheit gegenüber Fehlern in der Montage zu kompensieren und um die Zahl der Programme (bei gleicher Anzahl an Werkzeugbahnen) klein zu halten; (ii) das virtuelle Werkstück kann für die Planung der Roboterbahnen weniger Versionen der Anbauteile aufweisen als bei der Planung der Werkzeugbahnen, wenn die Ausführungszeit Optimierungskriterium ist und daher immer die kürzest mögliche Bewegung gesucht werden soll (auch wenn die Werkzeugbahnen für verschiedene Werkstückvarianten gleich sein sollen, um den Aufwand für die spätere Optimierung des Prozessergebnisses klein zu halten); (iii) für die Planung der Roboterbewegung wird das gleiche virtuelle Werkstück verwendet wie für die Planung der Werkzeugbahnen, was den Aufwand bei der Optimierung der Roboterbewegungen reduziert. Wie bereits weiter oben erläutert können unterschiedliche virtuelle Werkstücke in dem Software-Tool sehr einfach durch aktivieren oder deaktivieren einzelner Versionen von Anbauteilen (virtuell) erzeugt werden. Das heißt, jedes virtuelle Werkstück kann aus dem (vollständigen) Maximalmodell durch deaktivieren verschiedener Anbauteile abgeleitet werden, sodass die gewünschte Kombination von Anbauteile (die wiederum eine Überlagerung verschiedener konkret realisierbarer Werkstückvarianten sein kann) übrigbleibt.

Sofern für eine Werkzeugbahn keine Roboterbewegung gefunden wird, die für alle ausgewählten Versionen der Anbauteile mit identischer akzeptabler Roboterbewegungen ausgeführt werden kann, stehen in allen drei Fällen (i, ii, iii) drei Vorgehensweisen zur Wahl: (a) Erstens, für die Planung der Roboterbewegung werden die Varianten weiter unterteilt und für jene Versionen der Anbauteile, bei welchen es zu Problemen gekommen ist (z.B. Kollisionen, keine Bewegung herum gefunden, Positionen nicht in der Reichweite der Roboter, etc.), werden Untergruppen gebildet und für diese Untergruppen verschiedenen Roboterbewegungen geplant. (b) Zweitens, die Werkzeugbahn wird für alle Varianten basierend auf den Erkenntnissen betreffend das Problem bei der Planung der Roboterbewegung angepasst (z.B. wird die Stellung oder Position des Werkzeugs verändert, die TCP- bzw. Flanschposition so variiert dass der Roboter von Kollisionen "weg-gedrückt wird" oder TCP- bzw. Flanschposition bei Reichweiteprobleme zum Roboter "hin gezogen" wird). (c) Drittens, es werden die Werkzeugbahnen dupliziert und nur für jene Varianten (Versionen der Anbauteile) angepasst, für welche keine Roboterbewegung für die Werkzeugbahn geplant werden konnte, und für diese wird die eine neue Werkzeugbahn geplant.

Anders als im Modul 2 wird bei der Planung der Roboterbewegung (inkl. des zeitlichen Ablaufs) aber nicht für jede Werkzeugbahn (oder Gruppe von Werkzeugbahnen) definiert, welche der Anbauteile aktiviert werden (d.h. bei den Simulationen (Kollision und Prozessergebnis) berücksichtigt werden sollen und welche nicht), sondern hier wird ein kompletter Bewegungsablauf (d.h. die Basis für ein später exportierbares Roboterprogramm, siehe Modul 6) je Segment und Roboter und in der Regel für mehrere Varianten des Werkstücks kollisionsfrei definiert oder geplant, wobei nur zu der jeweiligen Varianten passende Werkzeugpfade verwendet werden.

Dabei wird anders als in Modul 2 nicht mehr Bahn für Bahn und diese Bereich für Bereich (z.B. Anbauteil für Anbauteil) geplant (wobei die restlichen Bereiche/Anbauteile unabhängig gewählt werden können, z.B. solange wie möglich das Maximalmodell), sondern es werden für das gesamte aktuelle Segment (nur noch) jene Varianten betrachtet, welche real produziert (demnächst oder insgesamt) oder bearbeitet werden, während für andere Segmente das gemäß Ergebnissen aus Modul 2, 3 und 4 maximal mögliche Modell (jenes mit den meistmöglichen Varianten) beibehalten wird, um auch externe Fehler abzufangen. Dazu werden aus einer Variantenliste die Anbauteile (allgemein: Bereiche mit lokalen geometrischen Ausprägungen) in dem betreffenden aktuellen Segment ermittelt und das Modell (virtuelle Werkstück) entsprechend aufgebaut. Dann werden die Werkzeugbahnen, welche für die Kombination der Anbauteile in Modul 2 geplant und in den Modulen 3 und 4 simuliert wurden, ausgewählt und alle restlichen Anbauteile (aus dem gleichen und anderen Segmenten) gemäß der Schnittmenge der für die ausgewählten Werkzeugbahnen in Modulen 2, 3 und 4 geplanten und geprüften Anbauteile, welche mindestens die in der Variante definierten Versionen der Anbauteile enthalten, ausgewählt (in einfachen Fällen ist dies für die anderen Segmente das Maximalmodell, für das aktuelle Segment die der Variante entsprechende Versionen der Anbauteile plus ggf. weiterer Versionen dieser Anbauteile). Für diese Kombination aus Bahnen und Anbauteilen wird der Bewegungsablauf komplett für das Segment und den ausgewählten Roboter geplant, wobei auch die anderen Roboter mit den ihnen zugeordneten Segmenten, Pfaden, Anbauteile geplant werden können, um die bei der kollisionsfreien Bewegungsplanung gegen gegenseitige Kollisionen auszuschließen.

Die verwendeten Bahnen wurden in Modul 2 (sowie 3 und 4) einzeln gegen definierte/bekannte Versionen von Anbauteilen und (damit) gegen definierte/bekannte Varianten von Werkstücken geprüft, wodurch aus der Schnittmenge der den aktuell (in Modul 5) verwendeten Bahnen zugeordneten Versionen der Anbauteile bzw. Varianten all jene Varianten ermittelt werden, die durch die resultierenden Roboterbewegungen (Bewegungsablauf, später in Modul 6 dem Roboterprogramm) abgedeckt werden. Die gesamte Schnittmenge an Bauteilvarianten wird diesen Roboterbewegungen bzw. Roboterprogrammen zugeordnet. Alternativ, oder wenn das gewünschte Ergebnis nicht durch Modifikation der Werkzeugbahnen (in Modul 2) oder Roboterbewegungen (in Modul 5) soweit erzielbar ist, dass es für alle verwendeten Versionen der Anbauteile den Anforderungen entspricht, wird die Gruppe der abgedeckten Versionen aufgeteilt, indem die Bewegungsplanung in zwei oder mehrere Fälle (Gruppen von Produktvarianten) aufgeteilt wird, indem bei den kritischen Anbauteilen die abgedeckten Versionen unterteilt und (in Modul 2) Werkzeugbahnen (sowie Signale, Prozessparameter, etc.) und/oder (in Modul 5) Roboterbewegungen je neuer Untergruppe von Versionen der Anbauteile für sich (separat) geplant und verbessert werden. Alternativ kann die Planung der Roboterbewegung in dem jeweiligen Segment auch nur für die eine aktuelle Variante durchgeführt werden und bei "eingefrorener Lösung" durch Aktivieren der anderen Versionen der Anbauteile auf weitere Varianten geprüft und ausgeweitet werden.

In allen oben erläuterten Fällen werden Bereiche des Bauteils (z.B. bei segmentweiser Abarbeitung oder bei Abarbeitung gemäß Versatz/Vorschub oder Verdrehung von Bauteil oder Skid etc.), die von den aktuell betrachteten Werkzeugbahnen nicht bearbeitet werden, nicht durch die konkret zu realisierende Werkstückvariante repräsentiert, sondern durch die Überlagerung aller Variationen der Anbauteile (Maximale Ausprägung, Worst-Case Ausprägung) bzw. durch Überlagerung aller Variationen der Anbauteile welche in der Bewegungsplanung von Modul 2 und Simulation von Modul 3 und 4 als "in Ordnung" für die zu verwendenden Werkzeugbahnen ermittelt wurden, wodurch sichergestellt wird, dass es für alle diese Anbauteile zu keiner Kollision oder negativer Beeinflussung (Verdeckung) kommt, wodurch die die Kombinationen signifikant reduziert werden für welche Werkzeugbahnen für die Region definiert werden müssen. Betreffend die Module 6 und 7 wird auf die Beschreibung zu Fig. 5 Bezug genommen.

Der Datenfluss zwischen den Modulen wird - ähnlich wie in Fig. 5 - durch die Buchstaben a) bis n) beschrieben. Buchstabe a) repräsentiert die Beschreibung aller Werkstückvarianten einer Gruppe (keine spezifische Werkstückvariante) und der Roboterzelle, beispielsweise die CAD-Modelle des Grundköpers und aller Versionen aller Anbauteile, die zu dem erwähnten (virtuellen) Maximalmodell verknüpft werden können. Buchstabe b) repräsentiert die für eine Untermenge aller Varianten (des Maximalmodells) geplanten Werkzeugbahnen (oder Werkzeugbahnen inklusive Parametern), die Beschreibung des zu bearbeitenden virtuellen Objektes, welches die Untermenge aller möglichen Varianten umfasst, für die die Werkzeugbahnen definiert wurden, sowie (optional) eine Beschreibung der Roboterzelle, für welche später die Kollisionsprüfung durchgeführt werden soll. Buchstabe c) repräsentiert das Ergebnis der Kollisionsprüfung für die dem Modul 3 übergebenen Bahnen. Mögliche Rückgabewerte sind "Kollision", "keine Kollision" und im Falle einer Kollision konkrete Informationen über Ort und Zeit der Kollision (entlang welcher Bahn tritt die Kollision auf, wann tritt sie auf und an welchem Punkt, welche Objekte kollidieren, etc.).

Buchstabe d) repräsentiert die festgelegten Werkzeugbahnen mit Parametern und die Beschreibung (CAD-Modell) der aktuell betrachteten Untermenge aller möglichen Werkstückvarianten und der Roboterzelle (oder nur Werkstück und Werkzeug), für die die Prozesssimulation (z.B. Simulation des Lackiervorgangs) durchgeführt werden soll. Dabei kann der Beitrag der einzelnen Werkzeugbahnen zum Prozessergebnis berücksichtigt werden. Buchstabe e) repräsentiert das simulierte Prozessergebnis bzw. den Beitrag zum Prozessergebnis für die an die Simulation übergebenen Werkzeugbahn(en) (Buchstabe d). Das Prozessergebnis kann beispielsweise die Dicke einer Lackschicht sein. Das Prozessergebnis wird für jede Version des Anbauteils oder für jede Variante simuliert und getrennt oder zusammengefasst dargestellt bzw. übermittelt (z.B. beim Lackieren als Prozentsatz der Fläche mit verschiedenen Schichtdicken oder einfach nur "in Ordnung" bzw "nicht in Ordnung" oder detailliert für jeden Teil der Oberfläche der jeweiligen Variante).

Buchstabe f) repräsentiert die durch Modul 2 geplanten und durch die Module 3 und 4 mittels Simulation verifizierten Werkzeugbahnen für eine alle Werkstückvarianten oder einer Untermenge davon. Modul 5 ist wie erwähnt dazu ausgebildet die für die Ausführung der Werkzeugbahnen benötigten Roboterbewegungen zu planen und mittels Simulation zu verifizieren. Buchstabe g) repräsentiert das Ergebnis der Simulation/Verifikation der resultierenden Roboterbewegungen aus Modul 5, falls ein Problem erkannt wird, welches eine Anpassung der Werkzeugbahnen durch Modul 2 erfordert. Beispielsweise kann eine geplante Werkzeugbahn bei der Ausführung durch den Roboter eine Kollision verursachen (z.B. ein anderer Roboter kollidiert mit dem Roboter, der die betrachtete Werkzeugbahn ausführt). Die Buchstaben h), i), j) und k) entsprechen im Wesentlichen den Buchstaben b), c), d) bzw. e), wobei bei der zweiten Simulation in den Modulen 3 und 4 nicht nur die Bewegung des Werkzeugs entlang der geplanten Werkzeugbahnen und das dabei erzielte Prozessergebnis simuliert wird, sondern die komplette Bewegung des Roboters, der das Werkzeug entlang den geplanten Bahnen bewegt, ggf. zusammen mit anderen Robotern und Maschinen in der Roboterzelle, und ggf. inklusive Abweichungen der Bewegungen von der geplanten Werkzeugbahn aufgrund des Verhaltens der Roboter (Dynamik, Überschleifen, etc.).

Buchstabe 1) repräsentiert die geplanten und mittels Simulation (Bewegungssimulation in Modul 3 und Prozesssimulation in Modul 4) verifizierten Werkzeugbahnen (inkl. der Geschwindigkeit des Werkzeugs). Buchstabe m) repräsentiert die Übergabe eines ausführbaren Roboterprogramms (Bewegungsbefehle, Parameter, Signale etc.) an die Robotersteuerung (Modul 7). Buchstabe n) repräsentiert eine Rückmeldung für den Fall, dass bei der realen Ausführung des Roboterprogramms ein Problem auftritt (z.B. das Prozessergebnis unzureichend ist).

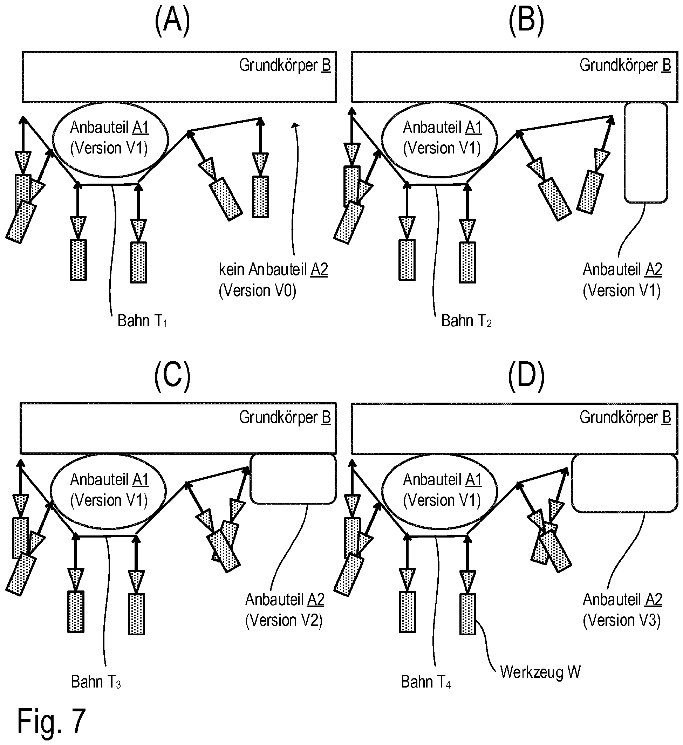

In den folgenden Figuren wird anhand exemplarischer Beispiele noch einmal verdeutlicht, wie mit Hilfe des hier beschriebenen Ansatzes zur Roboterprogrammierung eine signifikante Reduktion der zu planenden und bezüglich Prozessergebnis zu optimierenden Roboterbahnen erreicht werden kann. Figur 7 zeigt die individuelle Planung einer Werkzeugbahn für verschiedene konkret realisierbare Werkstückvarianten, wie es bei einer klassischen OLP gemacht wird. Betrachtet wird - als vereinfachtes Beispiel - ein Grundkörper B mit zwei Anbauteilen A1 und A2, wobei vom Anbauteil A1 die Version V1 verwendet wird und vom Anbauteil A2 jeweils die Versionen V0 (kein Anbauteil), V1, V2 und V3. Es sind also für vier verschiedene Varianten Werkzeugbahnen zu planen, nämlich A1 (V1) + A2 (V0), A1 (V1) + A2 (V1), A1 (V1) + A2 (V2), und A1 (V1) + A2 (V3). Diese vier Werkstückvarianten sind in den Diagrammen A, B, C bzw. D der Fig. 7 dargestellt. Das Werkzeug W ist im vorliegenden Beispiel eine Sprühpistole, die zum Lackieren der Oberfläche des Werkstücks verwendet wird.

Auch im Bereich des Anbauteils A1 wird die Lage der Werkzeugbahnen von den anderen Anbauteilen (im vorliegenden Fall dem Anbauteil A2) beeinflusst. Bei der Bearbeitung eines Werkstücks können für die Bearbeitung eines Bereichs des Werkstücks (z.B. ein Bereich um eine konkrete Version V1 eines Anbauteils A1) - abhängig vom "benachbartem" Anbauteil (das V Versionen aufweisen kann) - V verschiedene Werkzeugbahnen (im vorliegenden Fall T₁, T₂, T3 und T₄) erforderlich sein. Bei N benachbarten Anbauteilen mit jeweils V Versionen ergeben sich V^{N} verschiedene Werkstückbahnen. Auch bei nur wenigen Anbauteilen mit jeweils wenigen Versionen, ergibt sich bereits eine vergleichsweise hohe Zahl von verschiedene Werkzeugbahnen. Mit Hilfe des hier beschriebenen Ansatzes kann diese Zahl reduziert werden. Ausgehend von dem Beispiel in Fig. 7 kann die Anzahl der verschiedenen Werkzeugbahnen (oder Gruppen von Werkzeugbahnen) im besten Fall auf eins reduziert werden. Diese Situation ist in Fig. 8 dargestellt.

Gemäß Fig. 8 wird eine einzige Werkzeugbahn T₁ (oder eine Gruppe von Werkzeugbahnen) für die Bearbeitung des Werkstücks im Bereich des Anbauteils A1 (Version V1) geplant, wobei für die Planung der Werkzeugbahn und die Prüfung der Kollisionsfreiheit (Fig. 6, Modul 3) ein virtuelles Werkstück verwendet wird, bei dem alle möglichen Versionen des Anbauteils überlagert sind. Im dargestellten Beispiel wird - abgesehen von dem konkreten Anbauteil A1 - das Maximalmodell verwendet. Es könne auch für jede Variante separat eine Simulation durchgeführt werden (parallel) und das Ergebnis (je Variante oder zusammenfasst über die Varianten) dargestellt oder ausgewertet werden.

Wenn die Verifikation der Werkzeugbahn T₁ fehlschlägt (z.B. die Simulation eine Kollision vorhersagt oder das simulierte Prozessergebnis nicht ausreichend ist), kann die Planung der Werkzeugbahnen - wie in Fig. 9 dargestellt - in zwei Fälle aufgeteilt werden. Im Diagramm A der Fig. 9 wird eine Werkzeugbahn T₁" für eine virtuelles Werkstück geplant, bei dem die Versionen V1 und V2 des Anbauteils A1 überlagert sind, und im Diagramm B der Fig. 9 wird eine Werkzeugbahn T₂" für eine virtuelles Werkstück geplant, bei dem die Versionen V0 und V3 des Anbauteils A2 überlagert sind. Selbst wenn die maximal mögliche Reduktion der Werkzeugbahnen (oder Gruppen von Werkzeugbahnen) nicht erreicht werden kann (wie im Beispiel aus Fig. 8), kann dennoch häufig eine signifikante Reduktion der Werkzeugbahnen (im Beispiel aus Fig. 9 eine Halbierung) erreicht werden.

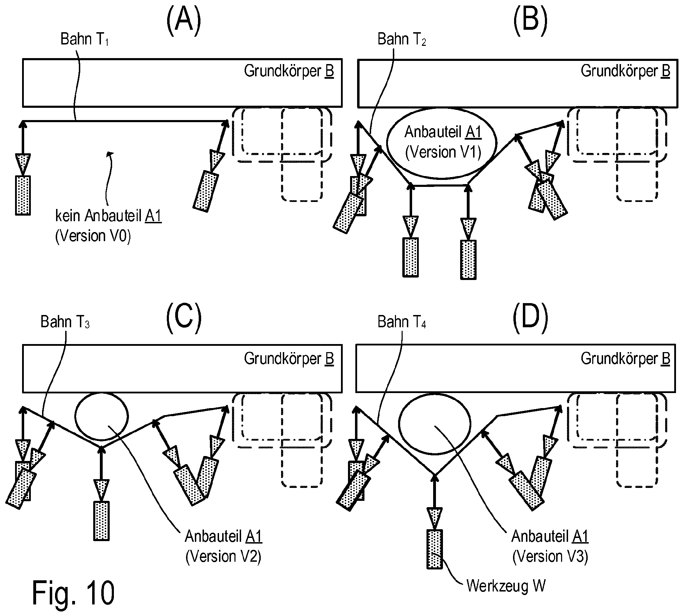

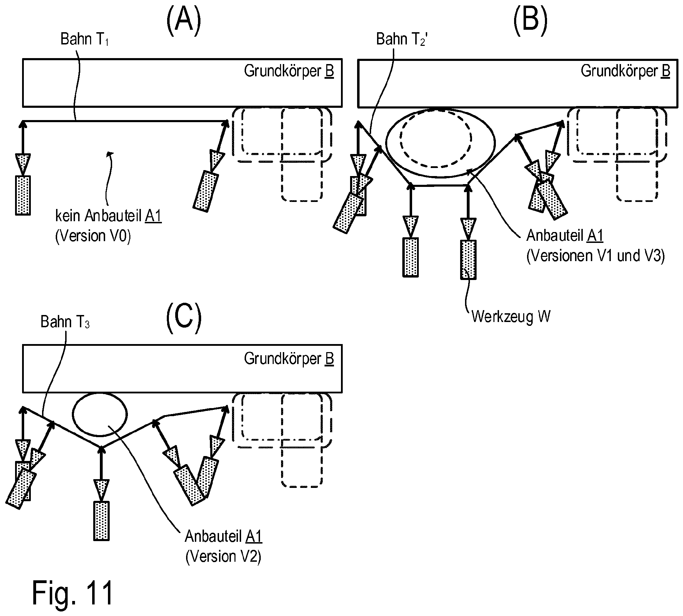

Figur 10 zeigt wiederum die individuelle Planung von Werkzeugbahnen (bzw. Gruppen von Werkzeugbahnen) für (im Bereich) verschiedene konkret realisierbare Werkstückvarianten (verschiedene geometrischen Ausprägungen des Werkstücks lokal im linken Bereich der Abbildungen), wie es bei einer klassischen OLP gemacht werden würde. Jedoch wird für das Anbauteil im rechten Bereich der Abbildungen eine Überlagerung aller geometrischen Ausprägungen (Versionen des Anbauteils) berücksichtigt. Betrachtet wird - als vereinfachtes Beispiel - ein Grundkörper B mit zwei Anbauteilen A1 und A2, wobei im rechten Bereich alle Versionen des Anbauteils A2 berücksichtigt werden, hingegen im linken Bereich durch Variation der Version des Anbauteils A1 (bei gleichbleibendem Anbauteil A2) vier verschiedene Werkstückvarianten betrachtet werden (bei gleichbleibendem Maximalmodell im Bereich um Anbauteil A2). In Diagramm A der Fig. 10 ist kein Anbauteil A1 (d.h. Version V0) am Grundkörper B vorgesehen, und die Werkzeugbahn T₁ kann parallel zur Oberfläche des Grundkörpers geführt werden (bis hin zum Anbauteil A2). In Diagramm B der Fig. 10 wird die (große) Version V1 des Anbauteil A1 verwendet, und die Werkzeugbahn T₂ kann wie dargestellt um das Anbauteil A1 herum geführt werden. In Diagramm C der Fig. 10 wird die (kleine) Version V2 des Anbauteil A1 verwendet, und die Werkzeugbahn T₃ wird ebenfalls um das Anbauteil A1 herumgeführt, jedoch in geringerem Abstand zum Grundkörper B als im Diagramm A. In ähnlicher Weise wird die Werkzeugbahn T₄ für die (mittlere) Version V3 des Anbauteils A1 geplant. Bei einer Anzahl von V Versionen eines Anbauteils werden demnach V Werkzeugbahnen geplant (bei gleichbleibenden benachbarten Anbauteilen). Ausgehend von dem Beispiel in Fig. 10 kann die Anzahl der verschiedenen Werkzeugbahnen (oder Gruppen von Werkzeugbahnen) im besten Fall auf eins reduziert werden, konkret in dem in Fig. 11 dargestellten Fall um eins reduziert werden. Diese Situation ist in Fig. 11 dargestellt. An dieser Stelle sei noch angemerkt, dass sechzehn (4 mal 4) statt vier Werkzeugbahnen geplant werden würden, wenn man auch für das rechte Anbauteil A2 jede Version einzeln berücksichtigen würde.

Durch das wahlweise Aktivieren/Deaktivieren einzelner oder mehrerer Versionen eines Anbauteils (oder mehrerer Anbauteile) unterstützt der hier beschriebene Ansatz zur Programmerstellung die Planung, Verifizierung und Optimierung eines reduzierten Satzes an Bahnen je Anbauteil, welches in verschiedenen Versionen auftritt. Wie in Fig. 11 dargestellt, wird eine einzige Werkzeugbahn T₂' für zwei Versionen V1 und V3 (siehe Fig. 11, Diagramm B) des Anbauteils A1 verwendet (nach Bahnplanung, Simulation des Prozessergebnisses, Simulation der Kollisionsfreiheit des Werkzeuges, Planung/Validierung der Bewegung des Roboters). Im dargestellten Beispiel wird lediglich für die Version V0 (kein Anbauteil A1) und die kleine Version V2 des Anbauteils A1 eine individuelle Bahn T₁ bzw. T₃ geplant. Diese Bahnen T₁ und T₃ werden z.B. erst dann (getrennt) geplant, wenn die Simulation/Verifikation des Prozesses ergibt, dass die Bahn T₂' für die Versionen V0 und V2 kein ausreichendes Bearbeitungsergebnis liefert. Die Zahl der Bahnen wird von vier auf drei reduziert.

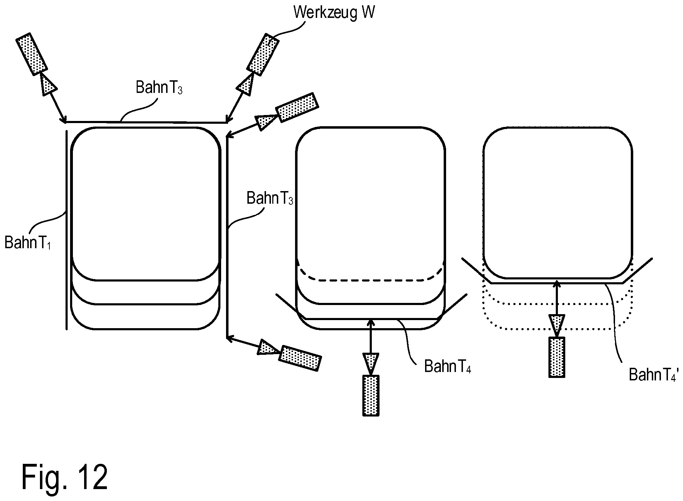

Das Beispiel aus Fig. 12 verdeutlicht, dass der hier beschriebene Ansatz zur Programmerstellung nicht nur auf Werkstückvarianten anwendbar ist, welche durch unterschiedliche Kombinationen von Anbauteilen an einem (identischen) Grundkörper entstehen, sondern auch auf eine Gruppe ähnlicher Werkstücke, beispielsweise ähnliche Produktvarianten einer Produktfamilie. Auch in diesem Fall können mehrere (oder alle) Produktvarianten der betrachteten Familie überlagert und zu einem virtuellen Werkstück verknüpft werden. In dem in Fig. 12 dargestellten Beispiel stellt die Überlagerung der drei Varianten das Maximalmodell dar. Die Werkzeugbahnen T₁, T₂ und T₃ für alle Varianten des Werkstücks der Produktgruppe simultan festgelegt/geplant und simuliert (Prozess, Kollisionsfreiheit), wobei bei der Planung alle Werkstückvarianten aktiviert sind (Maximalmodell). Wenn bei bestimmte Bereiche des virtuellen Werkstücks verbleiben, die sich nicht mit einer Werkzeugbahn mit hinreichender Qualität bearbeiten lassen (was sich bei der Prozesssimulation herausstellt), so wird ein (im Idealfall) minimales Set an Werkzeugbahnen definiert für jeweils Untergruppen aller Varianten der Werkstücke und den jeweiligen Werkstückvarianten der betreffenden Untergruppe zugeordnet.

Im Folgenden werden einige wichtige Aspekte der Erfindung zusammengefasst. An dieser Stelle sei angemerkt, dass es sich dabei nicht um eine vollständige Auflistung wesentlicher Merkmale handelt, sondern lediglich um eine exemplarische Zusammenfassung. Ein Ausführungbeispiel bezieht sich auf ein Verfahren zur computergestützten Programmierung von Robotern für die Bearbeitung von Werkstücken. Das Verfahren umfasst das Generieren eines ersten virtuellen Werkstücks durch Überlagerung von (z.B. CAD-) Modellen mehrerer Werkstückvarianten eines Werkstücks mittels eines auf einer Workstation ausgeführten Software-Tools sowie das Durchführen einer Bahnplanung zur Festlegung von Werkzeugbahnen für mindestens einen ersten Bereich des Werkstücks inklusive Verifikation der festgelegten Werkzeugbahnen auf Basis des ersten virtuellen Werkstücks. Das Verfahren umfasst weiter das Generieren eines zweiten virtuellen Werkstücks durch Überlagerung von Modellen mehrerer Werkstückvarianten des Werkstücks mittels des Software-Tools, wobei das erste virtuelle Werkstück nicht dieselbe Menge an überlagerten Werkstückvarianten aufweist wie das zweite virtuelle Werkstück, und anschließend das Durchführen einer Bahnplanung zur Festlegung von Werkzeugbahnen für mindestens einen zweiten Bereich des Werkstücks inklusive Verifikation der festgelegten Werkzeugbahnen auf Basis des zweiten virtuellen Werkstücks (vgl. Fig. 6). Die Bahnplanung/Verifikation erfolgt also Bereichsweise für verschiedene Bereiche des Werkstücks anhand von verschiedenen virtuellen Werkstücken.

In den hier beschriebenen Beispielen ist jede der Werkstückvarianten durch eine Menge bestimmter lokaler geometrischen Ausprägungen eines Grundkörpers gegeben, wobei die verschiedenen geometrischen Ausprägungen durch an dem Werkstückgrundkörper angeordnete Anbauteile (vgl. Fig. 9-11) oder durch Modifikation der äußeren geometrischen Form des Werkstückgrundkörpers (vgl. Fig.) gebildet werden können. Beispielsweise kann das erste virtuelle Werkstück in dem ersten Bereich eine Überlagerung einer ersten Anzahl geometrischer Ausprägungen aufweisen und in dem zweiten Bereich eine Überlagerung einer zweiten Anzahl geometrischer Ausprägungen aufweisen. Gleiches gilt für das zweite (und jedes weitere) virtuelle Werkstück gleichermaßen. Insbesondere können sich die geometrischen Ausprägungen in den unterschiedlichen Bereichen des Werkstücks, für die Werkzeugbahnen geplant werden sollen, im Hinblick auf eine tatsächliche Realisierung des Werkstücks ausschließen können. Ein virtuelles Werkstück kann also nicht realisierbar sein, weil sich beispielsweise zwei verschiedene Anbauteile überlappen (vgl. Fig. 9).

Techniken der Werkzeugbahnplanung inklusive Verifikation an sich sind bekannt. Die Verifikation der festgelegten Werkzeugbahnen kann z.B. folgendes aufweisen: die Simulation der Bewegung eines Werkzeugs entlang der geplanten Werkzeugbahnen und Prüfen auf Basis der Simulation, ob die simulierte Bewegung des Werk-zeugs kollisionsfrei möglich ist, sowie (zusätzlich oder alternativ) die Simulation des während der Bewegung des Werkzeugs vom Werkzeug erzielten Ergebnisses der Bearbeitung und Prüfen auf Basis der Simulation, ob das Ergebnis einem spezifizierten Kriterium (z.B. ausreichende Lackdicke im Falle eines Lackierprozesses) genügt. Die Simulation der Bewegung eines Werkzeugs entlang der geplanten Werkzeugbahnen berücksichtigt in der Regel nur die Bewegung des Werkzeugs, nicht jedoch die Bewegung des Roboters, der das Werkzeug bewegt. Für die Werkzeugbahnplanung in dem ersten Bereich des Werkstücks wird in dem zweiten Bereich des Werkstücks die Anzahl von bei der Simulation berücksichtigen geometrischen Ausprägungen (z.B. Anbauteile) möglichst groß gewählt (bestenfalls alle möglichen geometrischen Ausprägungen), wofür in dem zweiten Bereich (nur) jene geometrischen Ausprägungen nicht berücksichtigt werden, bei denen die Verifikation eine Kollision oder eine Verletzung des spezifizierten Kriteriums ergibt. Aus dem ersten virtuellen Werkstück werden also alle jene Werkstückvarianten entfernt, für die die Simulation ergibt, dass die Werkzeugbahnen nicht ausführbar sind (wegen einer Kollision) oder der Prozess (z.B. Lackieren) nicht das gewünschte Resultat ergibt. Für alle im ersten virtuellen Werkstück verbleibenden Werkstückvarianten sind die geplanten Werkzeugbahnen ausführbar (kollisionsfrei) und der Prozess liefert das gewünschte Ergebnis.

Basierend auf den festgelegten Werkzeugbahnen können die Roboterbewegungen (zeitlich und räumlich) ermittelt werden. Demnach werden die Roboterbewegungen, welche geeignet sind, mit einem Werkzeug die festgelegten Werkzeugbahnen in dem ersten Bereich des Werkstücks auszuführen, computergestützt ermittelt. Dies umfasst die Verifikation der ermittelten Roboterbewegungen mittels Simulation basierend auf dem ersten oder einem weiteren, gegenüber dem ersten modifizierten virtuellen Werkstück. Anschließend wird automatisch ein Roboterprogramms erzeugt, das die verifizierten Roboterbewegungen repräsentiert. Software-Tools zur automatischen Ermittlung der Roboterbewegung zu gegebenen Werkzeugbahnen inklusive der Zwischenbewegungen des Roboters (vom Endpunkt einer Bahn zum Startpunkt der nächsten Bahn) sind an sich bekannt. Gemäß den vorliegenden Beispiel kann dazu jedoch ein anderes virtuelles Werkstück verwendet werden wie für die Bahnplanung selbst. Beispielsweise kann das erste virtuelle Werkstück (das für die Bahnplanung im ersten Bereich verwendet wurde) für das Ermitteln der Roboterbewegungen modifiziert werden, indem jene Werkstückvarianten aus dem virtuellen Werkstück entfernt werden, welche im zweiten Bereich lokale geometrische Ausprägungen aufweisen, für die die Simulation der Roboterbewegungen (nicht zu verwechseln mit der Simulation der Werkzeugbewegung entlang der Werkzeugbahn) eine Kollision ergibt. Das modifizierte virtuelle Werkstück kann (schrittweise) weiter modifiziert wird, indem jene Werkstückvarianten aus dem modifizierten virtuellen Werkstück entfernt werden, welche in dem ersten oder dem zweiten Bereich lokale geometrische Ausprägungen aufweisen, für die die Simulation der Roboterbewegungen eine Kollision (mit dem Roboter) ergibt.

Gemäß einem Beispiel liegen der erste und der zweite Bereich in einem Segment des Werkstücks, das in einem Vorgang bearbeitet werden soll und für das einheitliche Roboterbewegungen geplant werden sollen. In diesem Fall kann das Verfahren das Generieren eines modifizierten virtuellen Werkstücks aufweisen, welches zumindest einige, insbesondere alle, Werkstückvarianten umfasst, die sowohl in dem ersten virtuellen Werkstück als auch in dem zweiten virtuellen Werkstück enthalten sind (Schnittmenge der Werkstückvarianten). Im Anschluss können die Roboterbewegungen, welche geeignet sind, die festgelegten Werkzeugbahnen in dem Segment des Werkstücks auszuführen, automatisiert mittels des Software-Tools ermittelt werden. Dies umfasst auch die Verifikation der ermittelten Roboterbewegungen mittels Simulation basierend auf dem modifizierten virtuellen Werkstück. Die ermittelten Roboterbewegungen oder ein daraus generiertes Roboterprogramm werden den in dem modifizierten virtuellen Werkstück enthaltenen Werkstückvarianten zugeordnet und können während der Produktion für die Bearbeitung einer konkreten Variante ausgewählt werden.

Ein weiteres Ausführungsbeispiel der Erfindung umfasst ein System zur computergestützten Programmierung von Robotern für die Bearbeitung von Werkstücken. Das System umfasst eine Workstation mit mindestens einem Prozessor, sowie ein mittels des mindestens einen Prozessors der Workstation ausgeführtes Software-Tool, das dazu programmiert ist: verschiedene virtuelle Werkstücke zu generieren, wobei Modelle jeweils mehrerer Werkstückvarianten eines Werkstücks überlagert werden, und Werkzeugbahnen für die Bearbeitung von unterschiedlichen Bereichen des Werkstücks mittels Simulation zu verifizieren, wobei für unterschiedliche Bereiche des Werkstücks unterschiedliche virtuelle Werkstücke verwendet werden. Das Software-Tool, kann weiter dazu programmiert sein, Roboterbewegungen zu ermitteln, welche geeignet sind, mit einem Werkzeug die festgelegten Werkzeugbahnen in einem ersten Bereich des Werkstücks auszuführen, die ermittelten Roboterbewegungen mittels Simulation basierend einem ersten der virtuellen Werkstücke, welches auch für Verifikation der Werkzeugbahnen des ersten Bereichs verwendet wurde, oder basierend auf einem modifizierten virtuellen Werkstück zu verifizieren, und ein Roboterprogram zu erzeugen, das die verifizierten Roboterbewegungen repräsentiert.

## Patentansprüche

1. Ein Verfahren zur computergestützten Programmierung von Robotern für die Bearbeitung von Werkstücken; das Verfahren weist auf:
Generieren eines ersten virtuellen Werkstücks durch Überlagerung von Modellen mehrerer Werkstückvarianten eines Werkstücks mittels eines auf einer Workstation ausgeführten Software-Tools;
Durchführen einer Bahnplanung zur Festlegung von Werkzeugbahnen für mindestens einen ersten Bereich des Werkstücks und Verifizieren der festgelegten Werkzeugbahnen auf Basis des ersten virtuellen Werkstücks;
Generieren eines zweiten virtuellen Werkstücks durch Überlagerung von Modellen mehrerer Werkstückvarianten des Werkstücks mittels eines auf einer Workstation ausgeführten Software-Tools, wobei das erste virtuelle Werkstück nicht dieselbe Menge an überlagerten Werkstückvarianten aufweist wie das zweite virtuelle Werkstück; und
Durchführen einer Bahnplanung zur Festlegung von Werkzeugbahnen für mindestens einen zweiten Bereich des Werkstücks und Verifizieren der festgelegten Werkzeugbahnen auf Basis des zweiten virtuellen Werkstücks.

2. Das Verfahren gemäß Anspruch 1,
wobei jede der Werkstückvarianten durch eine Menge bestimmter lokaler geometrischen Ausprägungen eines Grundkörpers gegeben ist.

3. Das Verfahren gemäß Anspruch 2,
wobei die verschiedenen geometrischen Ausprägungen durch an dem Werkstückgrundkörpers angeordnete Anbauteile oder durch Modifikation der äußeren geometrischen Form des Werkstückgrundkörpers gebildet werden.

4. Das Verfahren gemäß einem der Ansprüche 1 bis 3,
wobei das erste virtuelle Werkstück in dem ersten Bereich eine Überlagerung einer ersten Anzahl geometrischer Ausprägungen aufweist und in dem zweiten Bereich eine Überlagerung einer zweiten Anzahl geometrischer Ausprägungen aufweist,
wobei das zweite virtuelle Werkstück in dem ersten Bereich eine Überlagerung einer dritte Anzahl geometrischer Ausprägungen aufweist und in dem zweiten Bereich eine Überlagerung einer vierten Anzahl geometrischer Ausprägungen aufweist, und
und wobei sich die geometrischen Ausprägungen in dem ersten Bereich und/oder dem zweiten Bereich sich im Hinblick auf eine Realisierung des Werkstücks ausschließen können.

5. Das Verfahren gemäß einem der Ansprüche 1 bis 4, wobei das Verifizieren der festgelegten Werkzeugbahnen aufweist:
Simulation der Bewegung eines Werkzeugs entlang der geplanten Werkzeugbahnen und Prüfen auf Basis der Simulation, ob die simulierte Bewegung des Werkzeugs kollisionsfrei möglich ist, und/oder
Simulation des während der Bewegung des Werkzeugs vom Werkzeug erzielten Ergebnisses der Bearbeitung und Prüfen auf Basis der Simulation, ob das Ergebnis einem spezifizierten Kriterium genügt.

6. Das Verfahren gemäß Anspruch 5,
wobei bei der Simulation der Bewegung eines Werkzeugs entlang der geplanten Werkzeugbahnen nur die Bewegung des Werkzeugs, nicht jedoch die Bewegung des Roboters, der das Werkzeug bewegt, berücksichtigt wird.

7. Das Verfahren gemäß Anspruch 5 oder 6,
wobei - für die Bahnplanung in dem ersten Bereich - in dem zweiten Bereich die zweite Anzahl von bei der Simulation berücksichtigen geometrischen Ausprägungen möglichst groß ist, wofür in dem zweiten Bereich jene geometrischen Ausprägungen nicht berücksichtigt werden, bei denen die Verifikation eine Kollision oder eine Verletzung des spezifizierten Kriteriums ergibt.

8. Das Verfahren gemäß einem der Ansprüche 1 bis 7, das weiter aufweist:
computergestütztes Ermitteln von Roboterbewegungen, welche geeignet sind, mit einem Werkzeug die festgelegten Werkzeugbahnen in dem ersten Bereich auszuführen,
Verifizieren der ermittelten Roboterbewegungen mittels Simulation basierend auf dem ersten oder einem weiteren, gegenüber dem ersten modifizierten virtuellen Werkstück; und
automatisches Erzeugen eines Roboterprogramms, das die verifizierten Roboterbewegungen repräsentiert.

9. Das Verfahren gemäß Anspruch 8,
wobei das erste virtuelle Werkstück modifiziert wird, indem jene Werkstückvarianten aus dem virtuellen Werkstück entfernt werden, welche im zweiten Bereich lokale geometrische Ausprägungen aufweisen, für die die Simulation der Roboterbewegungen eine Kollision ergibt.

10. Das Verfahren gemäß Anspruch 8,
wobei der erste und der zweite Bereich in einem Segment des Werkstücks liegen und das Verfahren weiter aufweist:
Generieren eines modifizierten virtuellen Werkstücks, welches zumindest einige, insbesondere alle, Werkstückvarianten umfasst welche sowohl in dem ersten virtuellen Werkstück als auch in dem zweiten virtuellen Werkstück enthalten sind;
computergestütztes Ermitteln von Roboterbewegungen, welche geeignet sind, die festgelegten Werkzeugbahnen in dem Segment des Werkstücks auszuführen; und
Verifizieren der ermittelten Roboterbewegungen mittels Simulation basierend auf dem modifizierten virtuellen Werkstück.

11. Das Verfahren gemäß Anspruch 9,
wobei das modifizierte virtuelle Werkstück weiter modifiziert wird, indem jene Werkstückvarianten aus dem modifizierten virtuellen Werkstück entfernt werden, welche in dem ersten oder dem zweiten Bereich lokale geometrische Ausprägungen aufweisen, für die die Simulation der Roboterbewegungen eine Kollision ergibt.

12. Das Verfahren gemäß Anspruch 9, 10 oder 11, das weiter aufweist:
Zuordnen der ermittelten Roboterbewegungen oder ein daraus generiertes Roboterprogramm zu den in dem modifizierten virtuellen Werkstück enthaltenen Werkstückvarianten.

13. Computerprogrammprodukt, das Software-Instruktionen aufweist, welche bei Ausführung auf einer Workstation diese veranlassen, das Verfahren gemäß einem der Ansprüche 1 bis 12 durchzuführen.

14. Ein System zur computergestützten Programmierung von Robotern für die Bearbeitung von Werkstücken; das System weist auf:
eine Workstation mit mindestens einem Prozessor,
ein mittels des mindestens einen Prozessors der Workstation ausgeführtes Software-Tool, das dazu programmiert ist:
verschiedene virtuelle Werkstücke zu generieren, wobei Modelle jeweils mehrerer Werkstückvarianten eines Werkstücks überlagert werden;
Werkzeugbahnen für die Bearbeitung von unterschiedlichen Bereichen des Werkstücks mittels Simulation zu verifizieren, wobei für unterschiedliche Bereiche des Werkstücks unterschiedliche virtuelle Werkstücke verwendet werden.

15. Das System gemäß Anspruch 15, wobei das Software-Tool weiter dazu programmiert ist:
Roboterbewegungen zu ermitteln, welche geeignet sind, mit einem Werkzeug die festgelegten Werkzeugbahnen in einem ersten Bereich des Werkstücks auszuführen,
die ermittelten Roboterbewegungen mittels Simulation basierend einem ersten der virtuellen Werkstücke, welches auch für Verifikation der Werkzeugbahnen des ersten Bereichs verwendet wurde, oder basierend auf einem modifizierten virtuellen Werkstück zu verifizieren; und
ein Roboterprogram zu erzeugen, das die verifizierten Roboterbewegungen repräsentiert.
